# EUROPÄISCHE PATENTSCHRIFT

(11) **EP 0 408 581 B1**
(45) Veröffentlichungstag und Bekanntmachung des Hinweises auf die Patenterteilung: **11.08.1993**
(21) Anmeldenummer: 89902744.5
(22) Anmeldetag: 28.02.1989
(51) Int. Cl.: H04B 17/02

(54) **VERFAHREN UND SCHALTUNGSANORDNUNG ZUM ADRESSIEREN VON PROZESSOREINHEITEN**
PROCESS AND DEVICE FOR ADDRESSING PROCESSING UNITS
PROCEDE ET DISPOSITIF POUR L'ADRESSAGE D'UNITES DE TRAITEMENT

(30) Priorität: 03.03.1988 DE 3806948
(43) Veröffentlichungstag der Anmeldung: 23.01.1991
(73) Patentinhaber: Philips Patentverwaltung GmbH, 22335 Hamburg (DE); Philips Electronics N.V., 5621 BA Eindhoven (NL); SIEMENS AKTIENGESELLSCHAFT, 80333 München (DE)
(72) Erfinder: HERRMANN, Karl, D-8501 Eckental (DE); HECHT, Wilfried, D-8570 Pegnitz (DE); STEINER, Erhard, D-8031 Eichenau (DE); NARJES, Ferdinand, D-8000 München 70 (DE); WEIMERT, Günter, D-8000 München 71 (DE)
(74) Vertreter: Fuchs, Franz-Josef, Dr.-Ing.
(86) Internationale Anmeldenummer: DE8900117
(87) Internationale Veröffentlichungsnummer: WO8908359

(56) Entgegenhaltungen:
- EP-A- 0 143 489
- EP-A- 0 153 015
- DE-A- 2 823 918

## Beschreibung

Die Erfindung bezieht sich auf ein wie im Oberbegriff des Patentanspruchs 1 angegebenes Verfahren zum Adressieren von Prozessoreinheiten und auf eine Schaltungsanordnung zur Durchführung des Verfahrens.

Derartige Verfahren sind bereits aus der DE-OS 28 23 925 bekannt. Bei den bekannten Verfahren werden die Adressen mit Hilfe von Codierschaltern eingestellt, oder durch eine besondere Gestellverdrahtung festgelegt.

Ein Verfahren zur In-Betrieb-Überwachung einer Nachrichtenübertragungseinrichtung, bei der Nutzsignale über eine elektrooptische Übertragungsstrecke und Telemetriesignale über einen Hilfskanal übertragen werden, ist bereits aus Ewald Braun und Erhard Steiner: "Überwachung und zusätzliche Dienste der Digitalübertragungssysteme für Lichtwellenleiter", telcom report 10 (1987) Special "Multiplex- und Leitungseinrichtungen", Seite 109 bis 114 bekannt.

Das bekannte Verfahren verwendet adressenfreie Telemetrietelegramme, so daß die in den Leitungsendgeräten und Zwischenregeneratoren eines Übertragungsabschnitts vorgesehenen Prozessoreinheiten nicht adressiert zu werden brauchen. Das Verfahren läßt sich jedoch nicht ohne weiteres in Nachrichtenübertragungseinrichtungen anwenden, die eine Stern- bzw. Baumstruktur haben. Sieht man in einem Nachrichtenübertragungsnetz mit Stern- bzw. Baumstruktur im Telegrammübertragungsnetz der zugehörigen Telemetrieeinrichtung Prozessoreinheiten vor, die durch eine Ortungseinheit in zyklischer Folge adressengesteuert aufgerufen werden, so kann man zwar auch für das Telegrammübertragungsnetz der Telemetrieeinrichtung eine dem Nutzsignalnetz entsprechende Struktur vorsehen. Dabei ergibt sich jedoch das Problem, daß die Prozessoreinheiten jeweils auf eine bestimmte Adresse eingestellt werden müssen und dies nicht nur bei Inbetriebnahme der Telemetrieeinrichtung, sondern auch bei jeder Änderung der Nachrichtenübertragungseinrichtung, die eine neue Adressierung der Prozessoreinheiten erforderlich macht.

Dieses Problem tritt z. B. auch dann auf, wenn verzweigte Einrichtungen zur Verteilung elektrischer Energie oder dergleichen mit Hilfe einer Fernwirkeinrichtung überwacht werden sollen.

Aufgabe der Erfindung ist es daher, ein Verfahren und eine Schaltungsanordnung zur Durchführung des Verfahrens anzugeben, die es gestatten, die Prozessoreinheiten selbsttätig zu adressieren. Insbesondere soll es dabei möglich sein, Geräte mit Prozessoreinheiten für eine In-Betrieb-Überwachung von Nachrichten-, vorzugsweise Digitalsignal-Übertragungsstrecken selbsttätig zu adressieren.

Insbesondere soll ein Verfahren zur In-Betrieb-Überwachung nach dem Aufrufverfahren, das die Möglichkeit einer zentralen Überwachung von Digitalsignalübertragungsnetzen mit Linien-, Abzweig- und/oder Sternstruktur bietet, zusätzlich die Vorteile einer Selbstadressierung des gesamten Netzes bieten, so daß eine aufwendige und fehlerintensive manuelle Voreinstellung von Adressen entfällt.

Das erfindungsgemäße Verfahren sieht zur Lösung dieser Aufgabe die im kennzeichnenden Teil des Patentanspruchs 1 angegebenen Verfahrensschritte vor. Eine zweckmäßige Schaltungsanordnung zur Durchführung des Verfahrens ist in Anspruch 8 angegeben.

Das erfindungsgemäße Verfahren und die Schaltungsanordnung zur Durchführung des Verfahrens gestatten es in vorteilhafter Weise, Prozessoreinheiten, die über ein stern- bzw. baumförmiges Telegrammübertragungsnetz miteinander verbunden sind, auf besonders einfache Weise selbsttätig auf verschiedene Adressen einzustellen. Dabei ist ein Übertragungsabschnitt insbesondere durch einen Digitalsignalgrundleitungsabschnitt gebildet.

Vorteilhafte Weiterbildungen der Erfindung gehen aus den abhängigen Patentansprüchen hervor.

Ausgehend von den in den Ansprüchen 1 - 5 angegebenen Verfahren kann man vorsehen, daß die Adressiereinheiten jeweils bei Empfang eines Adressiertelegramms ein neues Adressiertelegramm aussenden. Demgegenüber ergibt sich durch die in Anspruch 6 angegebenen Verfahrensschritte ein besonders schneller Ablauf des Adressiervorganges.

Die Erfindung wird anhand der in den Figuren dargestellten Ausführungsbeispiele näher erläutert.

Es zeigen
- Fig. 1: einen Digitalsignal-Grundleitungsabschnitt,
- Fig. 2: ein aus drei Digitalsignal-Grundleitungsabschnitten bestehendes Liniennetz,
- Fig. 3: ein mehrere parallele Linien enthaltendes Sternnetz,
- Fig. 4: ein verzweigtes Sternnetz,
- Fig. 5: ein Telegrammübertragungsnetz mit einer Kaskadenschaltung,
- Fig. 6: ein Telegrammübertragungsnetz mit mehreren Kaskadenschaltungen,
- Fig. 7: ein Blockschaltbild einer vielseitig verwendbaren Prozessoreinheit,
- Fig. 8: ein Blockschaltbild einer Prozessoreinheit mit einem Busanschluß,
- Fig. 9: eine entsprechend Fig. 8 aufgebaute Prozessoreinheit, jedoch ohne Busanschluß und
- Fig.10: ein Liniennetz mit einer Tabelle für die Selbstadressierung von Prozessoreinheiter.

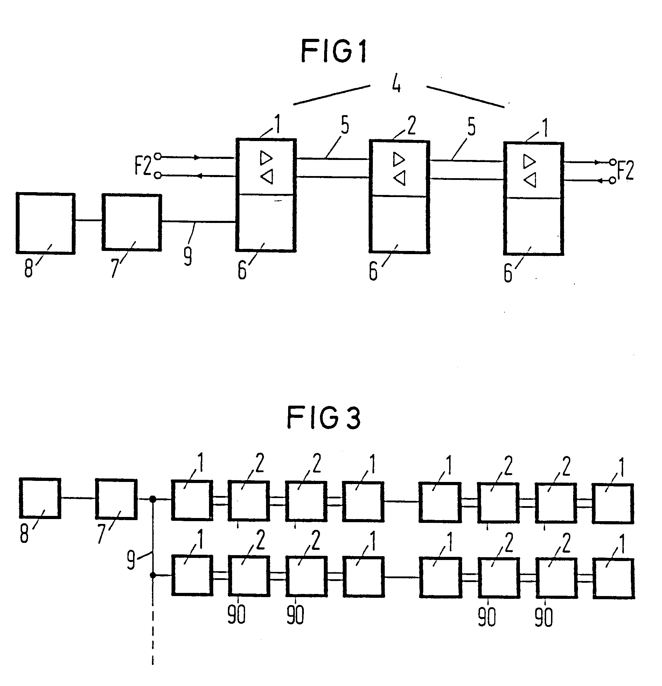

Leitungsendgeräte, Zwischenregeneratoren und Lichtwellenleiter sind die Grundelemente der in Fig. 1 gezeigten Digitalsignal-Übertragungsstrecke, deren Funktionsfähigkeit und Übertragungseigenschaften mit Hilfe von Geräten einer Einrichtung zur In-Betrieb-Überwachung, bestehend aus dem Ortungsmodul 7, dem Personalcomputer 8 und den In-Betrieb-Überwachungs-Prozessoreinheiten im folgenden als Prozessoreinheiten 6 bezeichnet, kontrolliert werden.

Das Ortungsmodul kann entfallen, wenn die Prozessoreinheiten 6 so ausgeführt werden, daß sie als Master oder als Slave geschaltet werden können. Dann muß eine Prozessoreinheit 6 als Master geschaltet werden und die Aufgaben des Ortungsmoduls übernehmen und die restlichen Prozessoreinheiten müssen als Slaves geschaltet werden.

Die kleinste Einheit einer Digitalsignal-Übertragungsstrecke ist ein Digitalsignal-Grundleitungsabschnitt, im folgenden als Leitungsabschnitt 4 bezeichnet. Bei der Übertragungseinrichtung nach Fig. 1 besteht der Leitungsabschnitt aus zwei Leitungsendgeräten 1 und einem oder mehreren bei Bedarf in die Strecke eingefügten Zwischenregeneratoren 2.

In jedes Leitungsendgerät 1 und in jeden Zwischenregenerator 2 ist eine Prozessoreinheit 6 eingesetzt, die jeweils über einen internen Bus die Überwachungsdaten von dem zu überwachenden Hauptsystem erhält.

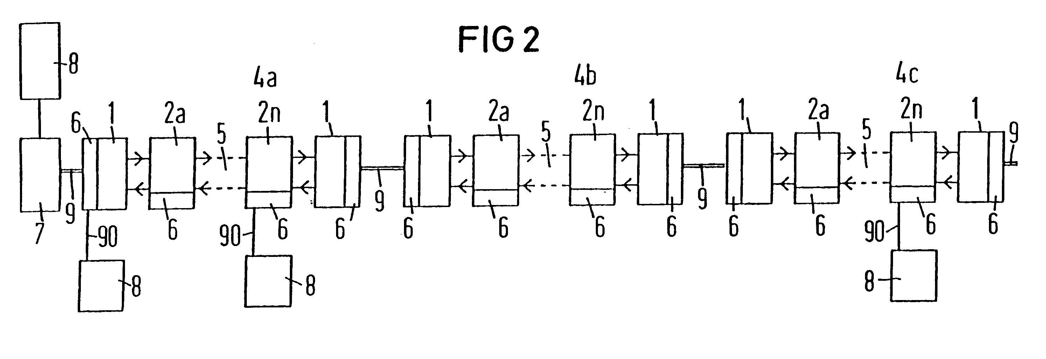

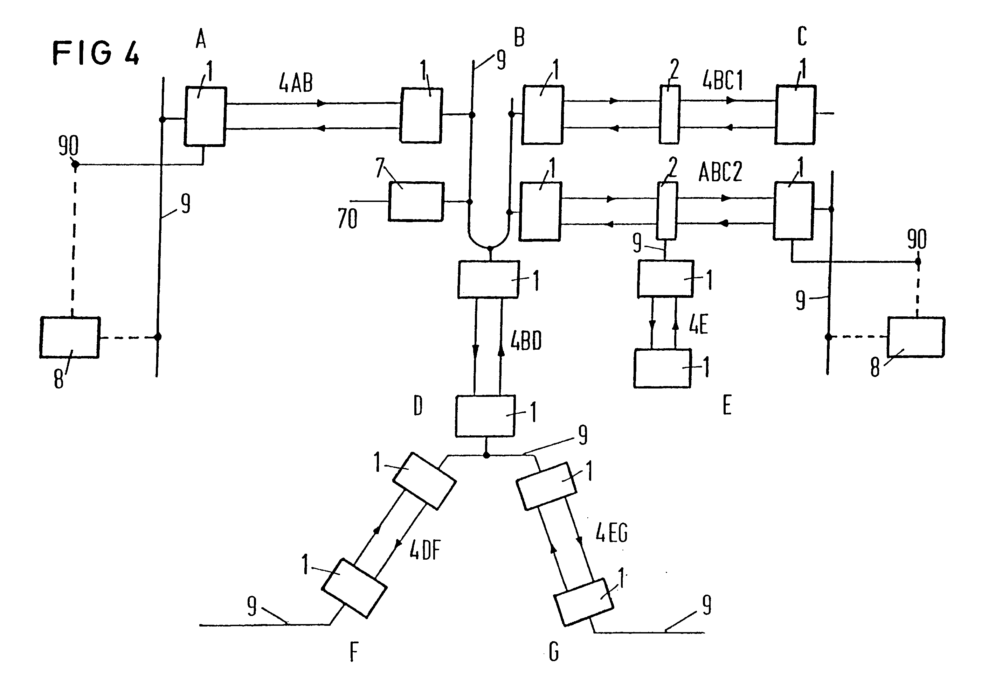

Der Ortungsbereich kann je nach Anforderungen aus folgenden Strukturen bestehen:
- aus einer Linie, die entsprechend Fig. 1 bzw. Fig. 2 aus einem oder mehreren in Kette geschalteten Leitungsabschnitten besteht,
- entsprechend Fig. 3 aus einem Netz mit mehreren parallelen Linien,
- nach Fig. 4 aus einem mit Abzweigungen versehenen Sternnetz.

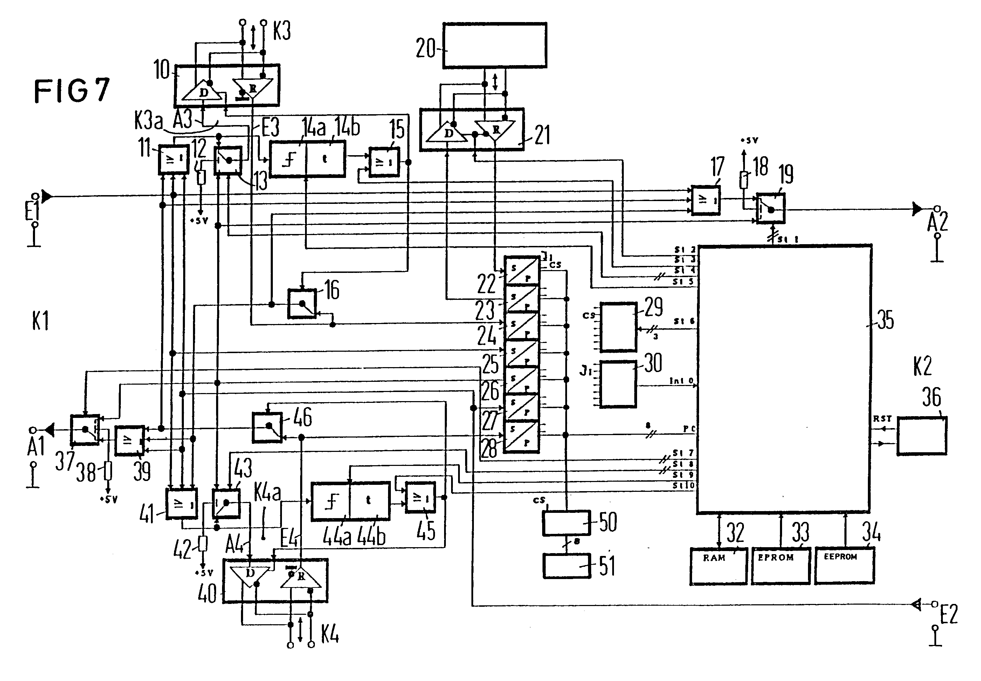

Jede Prozessoreinheit 6 wird durch einen Mikroprozessor gesteuert und ist entsprechend den Figuren 7 bis 9 aufgebaut. Sie hat im Leitungsendgerät 1 einen Anschluß K2 und im Zwischenregenerator 2 zwei Anschlüsse K1 und K2 - je einen für beide Richtungen - zur Ein- und Auskopplung in einen dem Nutzsignal überlagerten Hilfskanal. Zusätzlich können ein Anschluß K3 bzw. K3a für einen Netzknoten oder zwei Anschlüsse K3, K4 bzw. K3a, K4a für eine Kaskadenschaltung vorgesehen sein.

Je nach Anwendungsfall findet der Anschluß K3a oder die Anschlüsse K3a, K4a mit zwei unidirektionalen oder der Anschluß K3 oder die Anschlüsse K3, K4 mit einer bidirektionalen Schnittstelle Verwendung.

Die Daten der Prozessoreinheiten 6 werden jeweils innerhalb eines Leitungsabschnitts 4 über die Anschlüsse K1, K2 ausgekoppelt und in einem Hilfskanal übertragen, der vorzugsweise dem Nutzsignal überlagert ist.

Innerhalb einer Linie werden die Daten der Prozessoreinheiten 6 von Leitungsendgerät 1 zu Leitungsendgerät 1 über die vierdrähtigen Anschlüsse K1, K2, in den Hilfskanal ein- und ausgekoppelt und gegebenenfalls von einem Leitungsabschnitt 4a zum nächsten Leitungsabschnitt 4b über die Anschlüsse K3 bzw. K3a übertragen.

Bei der in Fig. 2 gezeigten Anordnung sind die Leitungsabschnitte 4a...4c in Kette geschaltet. In einer der beiden Endstellen der Kettenschaltung ist an die Prozessoreinheit 6 des Leitungsendgerätes 1 das Ortungsmodul 7 angeschlossen. An dieses Ortungsmodul 7 ist ein Personalcomputer 8 angeschlossen. Weitere Personalcomputer 8 sind unmittelbar an die Prozessoreinheit 6 des ersten Leitungsendgerätes 1 und an zwei der Zwischenregeneratoren 2n angeschlossen.

Innerhalb der Leitungsabschnitte 4a...4c werden Nutzsignale von Leitungsendgerät 1 zu Leitungsendgerät 1 übertragen. Die Daten der Prozessoreinheiten 6 werden innerhalb der Leitungsabschnitte 4a...4c jeweils über einen Hilfskanal und zwischen den Leitungsabschnitten 4a...4c jeweils über einen ISM-Bus (In-Service-Monitoring-Bus) 9 mit der Schnittstelle RS 485 (Anschluß K3 der Prozessoreinheit 6) übertragen.

Alle Prozessoreinheiten 6 haben zusätzlich einen Anschluß 90, insbesondere mit der Schnittstelle RS 232 C, an den ein Personalcomputer 8 angeschlossen werden kann. Von dieser Möglichkeit ist bei einem Leitungsendgerät und bei zwei Zwischenregeneratoren Gebrauch gemacht.

Fig. 3 zeigt zwei von mehreren am Netzknoten N (Abzweig) endenden Linien.

Am Netzknoten N sind die Prozessoreinheiten der Leitungsendgeräte 1 und das Ortungsmodul 7 über den ISM-Bus 9 (Anschluß K3 der Prozessoreinheit 6) miteinander verbunden.

Nach Fig. 4 sind die Orte A bis G über ein verzweigtes Sternnetz miteinander verbunden. Zwischen den Orten A und B sind ein Leitungsabschnitt 4AB ohne Zwischenregenerator, zwischen den Orten B und C zwei Leitungsabschnitte 4BC1, 4BC2 mit je einem Zwischenregenerator 2, zwischen dem Ort B und dem Ort D ein Leitungsabschnitt 4BD und zwischen dem Ort D und F und D und G jeweils ein Leitungsabschnitt 4DF und 4DG vorgesehen. Außerdem ist der Ort E über einen Leitungsabschnitt 4E mit dem Zwischenregenerator 2 des Leitungsabschnittes 4BC2 verbunden.

An den Orten A und C ist Jeweils ein Personalcomputer 8 an die Prozessoreinheit des Leitungsendgerätes 1 angeschlossen. Der Personalcomputer 8 kann dabei wahlweise an den ISM-Bus 9 mit der Schnittstelle RS 485 oder an einen zusätzlichen Anschluß der Prozessoreinheit mit der Schnittstelle RS 232 C erfolgen. Am ISM-Bus 9 am Ort B ist zusätzlich zu den Leitungsendgeräten 1 der dort endenden Leitungsabschnitte das Ortungsmodul 7 angeschlossen, das mit einer Einrichtung zur Pollingsteuerung versehen ist. Das Ortungsmodul 7 hat zusätzlich einen Anschluß 70 zum Anschluß einer Signalsammeleinrichtung, über den die Überwachungsdaten des Sternnetzes vom Ortungsmodul 7 durch die Signalsammeleinrichtung abgerufen werden können.

Bei einem Abzweig werden die Daten der Prozessoreinheit 6 zwischen den Leitungsendgeräten 1 über die Anschlüsse K3 bzw. K4 und über einen Netzknoten übertragen.

Bei den Netzen nach den Figuren 1 bis 4 ist an einem der Netzknoten oder an einer der Prozessoreinheiten eine Vorrichtung zur Ablaufsteuerung, insbesondere ein Ortungsmodul 7 und/oder ein Personalcomputer 8 angeschlossen. Das Ortungsmodul 7 oder ein Personalcomputer 8 ruft die einzelnen Prozessoreinheiten 6 nacheinander per Aufruftelegramm mit ihren Adressen auf, erhält deren Überwachungsdaten per Antworttelegramm und wertet diese aus.

Bei dem im folgenden beschriebenen Verfahren zur In-Betrieb-Überwachung werden die Ortungstelegramme asynchron mit einem Standardprotokoll nach IEC TC 57 übertragen. Für die Übertragung der Telegramme sind auch andere Protokolle möglich z. B. CCITT X25 (HDLC-Format). Das Ortungsmodul fragt in der Masterfunktion die Prozessoreinheiten des gesamten Netzes ab.

Die Adressierung der Geräte ist hierarchisch aufgebaut. Ein Byte ist für die Adressierung von Leitungsabschnitten, ein Byte für die Adressierung der Einheiten, gebildet durch Leitungsendgeräte und Zwischenregeneratoren innerhalb eines Leitungsabschnittes vorgesehen. Das erste Oktett des Adressfeldes enthält die Adresse des Leitungsabschnittes, das zweite Oktett die Geräteadresse, d. h. die Adresse des Leitungsendgerätes bzw. Zwischenregenerators.

Alle Adressen werden im folgenden in dezimaler Form angegeben und werden im Telegramm binär codiert.

Das dem Ortungsmodul nahe Leitungsendgerät eines Leitungsabschnittes erhält die Funktion eines sog. Adressier-Leitungsendgerätes.

Aufgabe des Adressier-Leitungsendgerätes ist es, den Selbstadressierungsvorgang innerhalb des zugehörigen Leitungsabschnittes einzuleiten. Die Aufforderung zum Start des Selbstadressierungsverfahrens erhält das Adressier-Leitungsendgerät entweder durch Aussenden eines Startadressiertelegramms durch
- das Ortungsmodul bei Inbetriebnahme des gesamten Netzes,
- ein Gerät (ein Leitungsendgerät bzw. ein Zwischenregenerator) z. B. nach dem Austausch einer Einheit und dem damit verbundenen Verlust der betreffenden Adresse oder
- durch einen innerhalb des Leitungsabschnittes an ein Gerät angeschalteten Personalcomputer.

Das Startadressiertelegramm belegt die beiden Adressbytes mit der Adresse 255, die nach IEC TC 57 die Bedeutung eines Rundspruches an alle hat. Der Befehl selbst ist in einem sog. Organisationsbyte enthalten.

Als Reaktion auf das Startadressiertelegramm gehen die Adressier-Leitungsendgeräte in einen Modus über, der eine Zwischenspeicherung aller von der Schnittstelle mit anderen Digitalsignalgrundleitungsabschnitten kommenden Telegramme bewirkt. Im Normalbetrieb werden die Telegramme transparent auf dem In-Betrieb-Überwachungskanal übertragen. Die einzelnen Geräte hören parallel mit und schalten sich nur bei der Übermittlung eigener Telegramme auf.

Beim weiteren Ablauf des Verfahrens ist zu unterscheiden zwischen reinen Linien- und Stern- bzw. Abzweig-Netzen. Liniennetze sind in den Figuren 1 und 2 dargestellt. Sternnetze sind in den Figuren 3 und 4 gezeigt.

Zunächst soll das Verfahren für ein Liniennetz beschrieben werden. In diesem Fall ist eine automatische Selbstadressierung ohne jede manuelle Adresseinstellung möglich.

Wie bereits erwähnt, gehen die Adressier-Leitungsendgeräte nach Empfang des Startadressiertelegramms in den Speicherbetrieb über. Die weiteren Aktivitäten der Adressier-Leitungsendgeräte hängen vom Ursprung des Startadressiertelegramms ab. Wird das Startadressiertelegramm vom Ortungsmodul ausgesandt, so warten die Adressier-Leitungsendgeräte auf das Eintreffen von sog. Adressiertelegrammen. Das Ortungsmodul sendet nach dem Startadressiertelegramm in einem zweiten Schritt ein Adressiertelegramm aus, das wie folgt aufgebaut ist.
Adressfelder: Leitungsabschnitt 255 (Rundspruch an alle)
Leitungsendgerät/Zwischenregenerator 255 (Rundspruch an alle)
Organisationsbyte: Kennung für Adressiertelegramm
Datenbyte D1: 1 (fortlaufende Adresse des Leitungsabschnittes)
Datenbyte D2: 1 (fortlaufende Adresse des Leitungsendgerätes/Zwischenregenerators)
Als Reaktion auf dieses Adressiertelegramm übernehmen alle Leitungsendgeräte bzw. Zwischenregeneratoren den Inhalt von D1 in ihren Adresspeicher für den Leitungsabschnitt und den Inhalt von D2 in den Adresspeicher für die Leitungsendgeräte bzw. Zwischenregeneratoren. Ferner wird von jedem Leitungsendgerät bzw. Zwischenregenerator der Inhalt von D2 inkrementiert und ein neues Adressiertelegramm mit dem neuen D2-Inhalt ausgesandt. Dieses zweite Adressiertelegramm erhalten alle Leitungsendgeräte bzw. Zwischenregeneratoren mit Ausnahme des ersten Leitungsendgerätes. Sie übernehmen den Inhalt von D1 (=1) als ihre Leitungsabschnitts-Adresse und den Inhalt von D2 (=2) als ihre Geräte-Adresse, inkrementieren anschließend D2 und senden ein neues Adressiertelegramm mit dem neuen D2-Inhalt aus. Dieses geht an alle Leitungsendgeräte bzw. Zwischenregeneratoren mit Ausnahme des ersten Leitungsendgerätes und des ersten Zwischenregenerators.

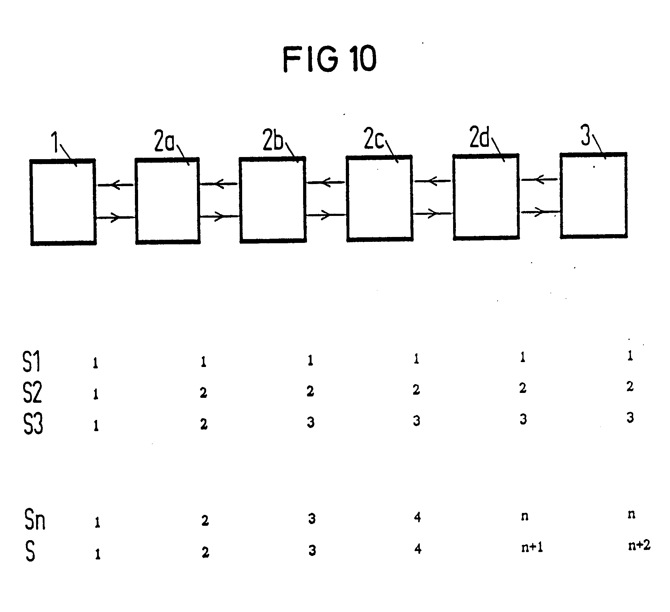

Der beschriebene Zyklus setzt sich entsprechend der Tabelle nach Figur 10 zunächst solange fort, bis das entfernte Leitungsendgerät des ersten Abschnitts erreicht ist. In diesem Leitungsendgerät wird der Inhalt von D1, d. h. die Adresse des Leitungsabschnittes inkrementiert und der Inhalt von D2, d. h. die Adresse des Leitungsendgerätes bzw. Zwischenregenerators auf 1 zurückgesetzt.

Das nahe Leitungsendgerät, d. h. das Adressier-Leitungsendgerät des zweiten Abschnitts übernimmt nun 2 als Leitungsabschnitt-Adresse und 1 als Leitungsendgerät- bzw. Zwischenregenerator-Adresse.

Der Zyklus setzt sich solange fort, bis das entfernte Leitungsendgerät des letzten Abschnitts erreicht ist.

Nach dem Tausch von Geräten besitzen die neuen Einheiten zunächst keine gültigen Adressen. In diesem Fall ist eine Selbstadressierung durchzuführen, die auf den betreffenden Leitungsabschnitt beschränkt bleiben kann.

Das getauschte Gerät sendet bei der Inbetriebnahme ein Startadressiertelegramm aus. Das dem Leitungsabschnitt zugeordnete Adressier-Leitungsendgerät erkennt aus der Richtung des ankommenden Telegramms - im betrachteten Beispiel von der Leitung -, daß es einen Selbstadressierungsvorgang einleiten soll.

Es sendet ein Adressiertelegramm aus, das im Organisationsbyte eine Kennung enthält, die besagt, daß nur innerhalb des Digitalsignalgrundleitungsabschnitts neu adressiert werden soll. Im Byte D1 dieses Adressiertelegramms steht die dem Adressier-Leitungsendgerät bekannte Adresse des betreffenden Leitungsabschnitts. Die Geräteadresse wird ausgehend vom Adressier-Leitungsendgerät jeweils entsprechend dem bereits beschriebenen Verfahren inkrementiert, bis das entfernte Leitungsendgerät erreicht ist. Das Adressier-Leitungsendgerät des folgenden Leitungsabschnitts erkennt aus dem Inhalt des Organisationsbytes, daß es dieses Adressiertelegramm nicht weiterleiten darf.

Wird auf die auf den Leitungsabschnitt bezogene Adressierung beim Tausch von Geräten verzichtet, und in diesem Fall eine Neuadressierung des kompletten (Linien-) Netzes durchgeführt, so müssen die Adressiertelegramme in den Adressier-Leitungsendgeräten nicht zwischengespeichert werden.

Im Fall einer Stern-Abzweig-Struktur ist bei einer Parallelverzweigung des Überwachungsnetzes eine Voreinstellung der Digitalsignalgrundleitungsabschnitt-Adressen in den Adressier-Leitungsendgeräten nötig, z. B. über Schalter, Codier-Pins, Lötbrücken oder durch Eingabe über einen Personalcomputer.

Nach dem Empfang eines Startadressiertelegramms senden die Adressier-Leitungsendgeräte - unabhängig vom Ursprung des Startadressiertelegramms - Adressiertelegramme aus, die wie bei der Linienstruktur in beiden Adressfeldern 255 enthalten. Im Byte D1 des Datenfeldes steht die betreffende Leitungsabschnitt-Adresse. Das Byte D2 enthält wiederum die fortlaufenden Adressen für Leitungsendgeräte bzw. Zwischenregeneratoren. Nach dem bei der Linienstruktur bereits beschriebenen Verfahren werden die Geräte eines Leitungsabschnittes mir der festen Leitungsabschnitt-Adresse und der fortlaufenden Leitungsendgeräte- bzw. Zwischenregenerator-Adresse adressiert.

In diesem Betriebsmodus geben die Adressier-Leitungsendgeräte die über die Schnittstelle ISM-Bus 9 eintreffenden Adressiertelegramme nicht weiter.

Voraussetzung für das ordnungsgemäße Funktionieren des Selbstadressierungsverfahrens ist, daß die Adressiertelegramme immer nur in die Hin-Richtung einer Strecke - ausgehend vom Adressier-Leitungsendgerät - eingespeist werden.

Im folgenden wird der Adressiervorgang eines Digitalsignalgrundleitungsabschnittes nach Austausch eines Leitungsendgerätes oder Zwischenregenerators beschrieben.

Es ist vorteilhaft nach Austausch eines Leitungsendgerätes oder Zwischenregenerators und nach Ziehen einer Prozessorbaugruppe aus dem Einsatz wegen des damit verbundenen Adressenverlustes nur alle Prozessoreinheiten eines einzigen Leitungsabschnittes neu zu adressieren. Der Start der Adressenzuweisung innerhalb eines Leitungsabschnittes erfolgt nach Stecken einer Prozessoreinheit in den Einsatz des neu zu adressierenden Leitungsabschnittes und nach gesteuerter oder automatischer Freigabe durch das Ortungsmodul bzw. den Personalcomputer in einem Zeitschlitz nach einem Abfragezyklus.

Die in den Einsatz gesteckte Prozessorbaugruppe sendet ein Steuerungstelegramm über die Anschlüsse K1 bis K4 an alle Prozessoreinheiten in dem Ortungsbereich. Das Steuerungstelegramm ist ein Langtelegramm mit der Adresse 255 (alle Leitungsabschnitte) im Adressfeld, mit der Adresse 255 (alle Prozessoreinheiten) in der Adresserweiterung und mit dem Befehl "Übergang in den Kontrollbetrieb" im Organisationsbyte des Datenfeldes.

Alle Prozessoreinheiten im Normalbetrieb geben ein Steuerungstelegramm ohne Zwischenspeicherung an die nachgeschalteten Prozessoreinheiten weiter. Zusätzlich kontrollieren sie Adressfeld und Adresserweiterung des Telegramms und schalten nach Auswertung des Organisationsbytes in den Kontrollbetrieb um.

Die Prozessoreinheit sendet nun ein Startadressiertelegramm an alle Prozessoreinheiten seines Leitungsabschnittes. Das Startadressiertelegramm ist ein Langtelegramm mit der Adresse 255 (alle Digitalsignalgrundleitungsabschnitte) im Adressfeld, mit der Adresse 255 Dez. (alle Prozessoreinheiten) in der Adresserweiterung und mit dem Befehl "eigenes Adressier-Leitungsendgerät für Digitalsignalgrundleitungsabschnitt Adressierung beginnen" im Organisationsbyte des Datenfeldes.

Ein Adressier-Leitungsendgerät für Adressierung eines Leitungsabschnittes führt den Befehl "eigenes Adressier-Leitungsendgerät für Leitungsabschnitt Adressierung beginnen" nur aus, wenn es diesen Befehl in einem Telegramm über den Anschluß K1 oder K2 erhält. Erhält es diesen Befehl in einem Telegramm über den Anschluß K3 oder K4, so verwirft es dieses Telegramm.

Die Adressier-Leitungsendgeräte für Adressierung eines Leitungsabschnittes generieren nach Empfang des Startadressiertelegramms ein Adressiertelegramm mit 255 im Adressfeld, 255 in der Adresserweiterung, der Nummer des Leitungsabschnittes im dritten Byte des Datenfeldes (eigene Leitungsabschnitt-Adresse) und 001 im vierten Byte des Datenfeldes (eigene Prozessoreinheit-Adresse). Dann senden sie dieses Telegramm an die nachgeschalteten Prozessoreinheiten.

Die nachgeschalteten Prozessoreinheiten in den Zwischenregeneratoren und in den empfangenden Leitungsendgeräten am Ende jedes Leitungsabschnittes erhalten das Adressiertelegramm über einen der Anschlüsse K1, K2. Sie übernehmen das dritte Datenbyte des Adressiertelegramms direkt als eigene Leitungsabschnitt-Adresse, erhöhen das vierte Datenbyte um 1 und übernehmen es dann als eigene Prozessoreinheit-Adresse. Anschließend wird der Inhalt der eigenen Adressenspeicher in das dritte und vierte Datenbyte eines neuen Adressiertelegramms eingesetzt und dieses über die Anschlüsse K2 des Zwischengenerators bzw. K3 des Leitungsendgerätes zur Prozessorbaugruppe im gleichen bzw. nächsten Leitungsabschnitt weitergesendet.

Die Prozessorbaugruppen in den Adressier-Leitungsendgeräten für Adressierung eines Leitungsabschnittes erhalten die Adressiertelegramme eines benachbarten Leitungsabschnittes über den Anschluß K3. Sie verwerfen diese Telegramme und senden sie nicht weiter.

Für das ordnungsgemäße Funktionieren des Verfahrens ist Voraussetzung, daß die Adressiertelegramme nur zur nächsten Prozessoreinheit weitergegeben, aber nicht zurückgesendet werden.

Bei manueller Adressierung der Adressier-Leitungsendgeräte 1 werden die Adressen im Ortungsabschnitt wie folgt eingestellt.

Die Adressen der Prozessoreinheit setzen sich aus zwei Byte zusammen:
- Ein Adreßbyte für die Nummer des Leitungsabschnittes, in dem die Prozessoreinheit eingesetzt ist.
- Ein Adreßbyte für die Nummer der Prozessoreinheit 6 innerhalb dieses Leitungsabschnittes.
In einem Aufruftelegramm mit dem Übertragungsprotokoll nach z.B. IEC TC57 enthält das Adreßfeld die Nummer des Leitungsabschnittes 4 und das erste Datenbyte (Adreßerweiterung) im Datenfeld die Nummer der aufzurufenden Prozessoreinheit 6 innerhalb dieses Leitungsabschnittes.

Zur Inbetriebnahme der Streckeneinrichtungen erhält eines der beiden Leitungsendgeräte 1 am Anfang oder Ende jeder Linie, die Funktion eines Adressier-Leitungsendgerätes für die Adressierungsphase. Diese Funktion und eine frei wählbare Leitungsabschnitt-Adresse wird dem Adressier-Leitungsendgerät 1 entweder mit Hilfe eines Codierschalters bzw. DIP-FIX-Schalters auf der Prozessoreinheit 6, über Codierstifte im Einsatz über die Steckerleiste der Baugruppe oder über einen eigenen PC-Anschluß zugewiesen.

Damit die Nummer des Leitungsabschnitts 4 und die Nummer der Prozessoreinheit bei der automatischen Adressierung eines Ortungsabschnittes einheitlich vom Ortungsmodul oder Personalcomputer aus gesehen, den Prozessoreinheiten als Adressen in aufsteigender Reihenfolge zugeordnet werden, ist es vorteilhaft, das dem Ortungsmodul oder Personalcomputer nähere Leitungsendgerät jeder Linie als Adressier-Leitungsendgerät zu bestimmen.

Die Prozessoreinheit kann zwischen zwei Moden für die Übertragung der Telegramme umgeschaltet werden.
1. Normalbetrieb: Alle an den Schnittstellen ankommenden Telegramme werden sofort an die nächsten Streckengeräte weitergegeben und parallel vom Mikroprozessor auf ihren Inhalt hin überprüft.
2. Speicherbetrieb: Alle an den Schnittstellen ankommenden Telegramme werden erst vom Mikroprozessor auf ihren Inhalt hin überprüft, bevor sie an die nächsten Streckengeräte weitergegeben werden.

Der Adressiervorgang bei Inbetriebnahme einer Strecke mit manueller Adressierung der Adressier-Leitungsendgeräte läuft wie folgt ab:
Der Start der automatischen Adressenzuweisung für alle Prozessoreinheiten eines Ortungsbereiches erfolgt nach Streckenaufbau entweder am Ortungsmodul z.B. mittels einer Taste, oder an einem Personalcomputer 8 über dessen Tastatur. Das Ortungsmodul 7 oder der Personalcomputer 8 sendet ein Startadressiertelegramm an alle Prozessoreinheiten des Ortungsbereiches.

Alle Prozessoreinheiten sind im Normalbetrieb.
Das Startadressiertelegramm ist ein Langtelegramm mit der Adresse 255 (alle Leitungsabschnitte 4) im Adreßfeld, mit der Adresse 255 (alle Prozessoreinheiten) in der Adreßerweiterung und mit den Befehlen "Übergang in den Speicherbetrieb" und "Adressier-Leitungsendgerät Adressierung beginnen" im Organisationsbyte des Datenfeldes.

Alle Prozessoreinheiten 6 geben das Startadressiertelegramm ohne Zwischenspeicherung an die nachgeschalteten Prozessoreinheiten 6 weiter. Zusätzlich kontrollieren sie Adreßfeld und Adreßerweiterung des Telegramms und schalten nach Überprüfung des Organisationsbytes in den Speicherbetrieb um.

Die Adressier-Leitungsendgeräte generieren nach Empfang des Startadressiertelegramms ein Adressiertelegramm mit 255 im Adreßfeld, 255 in der Adreßerweiterung, der Nummer der Leitungsabschnitte 4 im 3. Byte des Datenfeldes (eigene Leitungsabschnitt-Adresse, im folgenden L-Adresse genannt) und 001 im 4. Byte des Datenfeldes (eigene Prozessor-Adresse, im folgenden P-Adresse genannt). Dann senden sie dieses Telegramm an die nachgeschaltete Prozessoreinheit.

Die nachgeschalteten Prozessoreinheiten in den Zwischenregeneratoren und in den empfangenden Leitungsendgeräten am Ende jedes Leitungsabschnitts 4 erhalten das Adressiertelegramm über einen der Anschlüsse K1, K2. Sie übernehmen das 3. Datenbyte des Adressiertelegramms direkt als eigene L-Adresse, erhöhen das 4. Datenbyte um Eins und übernehmen es dann als eigene P-Adresse. Anschließend wird der Inhalt der eigenen Adressenspeicher in das 3. und 4. Datenbyte eines neuen Adressiertelegramms eingesetzt und dieses über die Anschlüsse K1 oder K2 beim Zwischenregenerator bzw. K3 beim Leitungsendgerät zur Prozessoreinheit im nächsten Leitungsabschnitt 4 weitergesendet.

Die Prozessoreinheiten in den sendenden Leitungsendgeräten erhalten die Adressiertelegramme über den Anschluß K3 (Anfang eines Leitungsabschnittes). Sie erhöhen das 3. Datenbyte um Eins (eigene L-Adresse), überschreiben das 4.Datenbyte mit 001 (eigene P-Adresse) und übernehmen sie dann in die Adressenspeicher. Anschließend wird der Inhalt der eigenen Adressenspeicher in das 3. und 4. Datenbyte eines neuen Adressiertelegramms eingesetzt und dieses zur nächsten Prozessoreinheit weitergesendet.

Die Prozessoreinheit in den Adressier-Leitungsendgeräten erhalten die Adressiertelegramme eines benachbarten Leitungsabschnittes 4 über den Anschluß K3.

Sie verwerfen diese Telegramme und senden sie nicht weiter.

Für das ordnungsgemäße Funktionieren des Verfahrens ist Voraussetzung, daß die Adressiertelegramme nur zur nächsten Prozessoreinheit 6 weitergegeben, aber nicht zurückgesendet werden.

Der Adressiervorgang einer Linie nach Austausch eines Leitungsendgerätes oder Zwischenregenerators mit manueller Adressierung der Adressier-Leitungsendgeräte läuft wie folgt ab:
Nach Austausch eines Adressier-Leitungsendgerätes erhält das Gerät seine L-Adresse entweder mit Hilfe eines Codierschalters bzw. DIP-FIX-Schalters auf der Prozessoreinheit, über Codierstifte im Einsatz über die Steckerleiste der Baugruppe oder über einen eigenen PC-Anschluß zugewiesen.

Es ist vorteilhaft, nach Austausch eines empfangenden Leitungsendgerätes bzw. Zwischenregenerators oder nach Ziehen einer diesen Geräten zugehörenden Prozessoreinheit aus dem Einsatz - wegen des damit verbundenen Adressenverlustes - nur alle Prozessoreinheiten einer Linie neu zu adressieren. Der Start der Adressenzuweisung innerhalb einer Linie erfolgt nach Stecken einer Prozessoreinheit in den Einsatz der neu zu adressierenden Linie und nach automatischer Freigabe durch das Ortungsmodul bzw. den Personalcomputer in einem Zeitschlitz nach einem Aufrufzyklus.

Die in den Einsatz gesteckte Prozessor-Baugruppe sendet in diesen Zeitschlitz ein Steuerungstelegramm über die Anschlüsse K1, K2 und K3 an alle Prozessoreinheiten und an das Ortungsmodul bzw. den Personalcomputer in dem Ortungsbereich. Das Steuerungstelegramm ist ein Langtelegramm mit der Adresse 255 (alle Leitungsabschnitte 4) im Adreßfeld, mit der Adresse 255 (alle Prozessoreinheiten) in der Adreßerweiterung und mit dem Befehl "Übergang in den Speicherbetrieb" im Organisationsbyte des Datenfeldes.

Alle Prozessoreinheiten im Normalbetrieb geben ein Steuerungstelegramm ohne Zwischenspeicherung an die nachgeschalteten Prozessoreinheiten weiter. Zusätzlich kontrollieren sie Adreßfeld und Adreßerweiterung des Telegramms und schalten nach Auswertung des Organisationsbytes in den Speicherbetrieb um.

Nach Empfang des Steuerungstelegramms gibt das Ortungsmodul / der Personalcomputer einen für den Adressiervorgang ausreichenden Zeitschlitz frei.

Die Prozessoreinheit sendet nun ein Startadressiertelegramm an die Prozessoreinheiten seines Leitungsabschnittes. Das Startadressiertelegramm ist ein Langtelegramm mit der Adresse 255 (alle Leitungsabschnitte 4) im Adreßfeld, mit der Adresse 255 (alle Prozessoreinheiten) in der Adreßerweiterung und mit dem Befehl "eigenes Adressier-Leitungsendgerät Adressierung beginnen" im Organisationsbyte des Datenfeldes.

Ein Adressier-Leitungsendgerät führt den Befehl "Eigenes Adressier-Leitungsendgerät Adressierung beginnen" nur aus, wenn es diesen Befehl in einem Telegramm über den Anschluß K1, K2 erhält. Erhält es diesen Befehl in einem Telegramm über den Anschluß K3, so verwirft es dieses Telegramm.

Die Adressier-Leitungsendgeräte generieren nach Empfang des Startadressiertelegramms ein Adressiertelegramm mit 255 im Adreßfeld, 255 in der Adreßerweiterung, der Nummer der Leitungsabschnitte im 3. Byte des Datenfeldes (eigene L-Adresse) und 001 im 4. Byte des Datenfeldes (eigene P-Adresse). Dann senden sie dieses Telegramm an die nachgeschalteten Prozessoreinheit.

Die nachgeschalteten Prozessoreinheiten in den Zwischenregeneratoren und in den empfangenden Leitungsendgeräten am Ende jedes Leitungsabschnitts erhalten das Adressiertelegramm über einen der Anschlüsse K1, K2. Sie übernehmen das 3. Datenbyte des Adressiertelegramms direkt als eigene L-Adresse, erhöhen das 4. Datenbyte um Eins und übernehmen es dann als eigene P-Adresse. Anschließend wird der Inhalt der eigenen Adressenspeicher in das 3. und 4. Datenbyte eines neuen Adressiertelegramms eingesetzt und dieses über die Anschlüsse K1, K2 beim Zwischenregenerator bzw. K3 beim Leitungsendgerät zur Prozessor-Baugruppe im nächsten Leitungsabschnitt 4 weitergesendet.

Die Prozessoreinheiten in den sendenden Leitungsendgeräten erhalten die Adressiertelegramme über den Anschluß K3 (Anfang eines Leitungsabschnitts 4). Sie erhöhen das 3. Datenbyte um Eins (eigene L-Adresse), überschreiben das 4. Datenbyte mit 001 (eigene P-Adresse) und übernehmen sie dann in die Adressenspeicher. Anschließend wird der Inhalt der eigenen Adressenspeicher in das 3. und 4. Datenbyte eines neuen Adressiertelegramms eingesetzt und dieses zur nächsten Prozessoreinheit weitergesendet.

Die Prozessoreinheiten in den Adressier-Leitungsendgeräten erhalten die Adressiertelegramme eines benachbarten Leitungsabschnitts 4 über den Anschluß K3. Sie verwerfen diese Telegramme und senden sie nicht weiter.

Für das ordnungsgemäße Funktionieren des Verfahrens ist Voraussetzung, daß die Adressiertelegramme nur zur nächsten Prozessoreinheit weitergegeben, aber nicht zurückgesendet werden.

Bei dem bisher beschriebenen Verfahren muß bei einem Abzweig bzw. Netzknoten die Adresse des Adressier-Leitungsendgerätes mittels Codierstiften oder per Eingabe durch einen Personalcomputer vor Ort eingestellt werden. Eine automatische Einstellung der L-Adresse ist auch möglich, wenn statt eines Netzknotens mit parallelem Anschluß eine Kaskadenschaltung für die abzweigenden Geräte eingesetzt wird.

FIG 7 zeigt das Blockschaltbild einer Prozessor-Baugruppe mit den beiden Anschlüssen K3 und K4 bzw. K3a und K4a für die Kaskadenschaltung eines Abzweigs. Dabei sind bidirektionale Busse an die beiden Anschlüsse K3 und K4 und/oder Vierdrahtbusse an die Anschlüsse K3a und K4a anzuschließen.

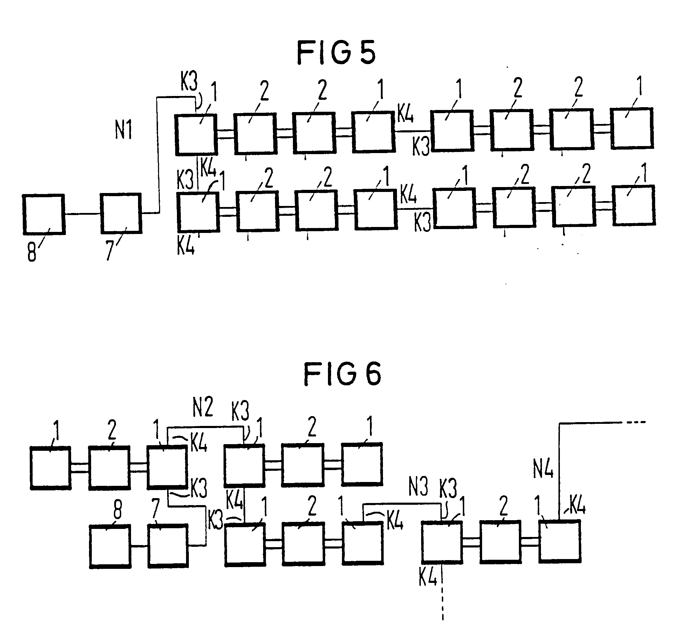

In den FIG 5 und 6 werden Beispiele der Kaskadenschaltung unter Verwendung der Anschlüsse K3 und K4 gegeben. Dabei ist in FIG 5 ein Netz mit parallelen Linien und in FIG 6 ein Netz mit Baumstruktur gezeigt.

Das erste Gerät an jedem Abzweig wird bei der Adressierung ein Adressier-Leitungsendgerät mit eigener L-Adresse. Jede Prozessoreinheit eines Leitunsabschnitts 4 hat die gleiche L-Adresse und eine eigene P-Adresse.

Für den Ablauf der Adressierung ist das folgende Verfahren vorgesehen:
Eingabe der Netzstruktur über den Personalcomputer 8 in das Ortungsmodul 7.
Über ein interaktives Verfahren werden am Bildschirm des Personalcomputers die Netzstruktur - Anzahl der Netzknoten, Anzahl der Abzweigungen mit je einem Adressier-Leitungsendgerät an jedem Netzknoten, Anzahl der Prozessoreinheiten in jedem Leitungsabschnitt 4 - eingegeben.

Der Start der automatischen Adressenzuweisung für alle Prozessoreinheiten eines Ortungsbereiches erfolgt nach Streckenaufbau entweder am Ortungsmodul mittels einer Taste, oder an einem Personalcomputer über dessen Tastatur. Alle Prozessoreinheiten sind im Normalbetrieb.

Das Ortungsmodul oder der Personalcomputer sendet ein Steuerungstelegramm an alle Prozessoreinheiten des Ortungsbereiches. Das Steuerungstelegramm ist ein Langtelegramm mit der Adresse 255 (alle Leitungsabschnitte 4) im Adreßfeld, mit der Adresse 255 (alle Prozessoreinheiten) in der Adreßerweiterung und mit dem Befehl "Übergang in den Speicherbetrieb" im Organisationsbyte des Datenfeldes.

Alle Prozessoreinheiten geben das Steuerungstelegramm ohne Zwischenspeicherung an die nachgeschalteten Prozessoreinheiten weiter. Zusätzlich kontrollieren sie Adreßfeld und Adreßerweiterung des Telegramms und schalten nach Überprüfung des Organisationsbytes in den Speicherbetrieb um.

Das Ortungsmodul oder der Personalcomputer sendet nun ein Startadressiertelegramm an das erste sendende Leitungsendgerät über den Anschluß K3 des ersten Netzknotens. Das Startadressiertelegramm ist ein Langtelegramm mit 255 im Adressfeld, 255 in der Adresserweiterung, Nummer des Leitungsabschnitts im 3. Byte des Datenfeldes (zugewiesene L-Adresse), 001 im 4. Datenbyte des Datenfeldes (P-Adresse) und dem Befehl "Adressier-Leitungsendgerät Adressierung beginnen" im Organisationsbyte des Datenfeldes. Durch dieses Telegramm wird dieses Leitungsendgerät ein Adressier-Leitungsendgerät. Das Adressier-Leitungsendgerät übernimmt das 3. Datenbyte und 4. Datenbyte in seinen Adressenspeicher und sendet das Startadressiertelegramm mit un Eins erhöhtem Inhalt des 3. Datenbytes über sehnen Anschluß K4 an das nächste sendende Leitungsendgerät über den Anschluß K2 des Netzknotens usw.

Die Adressier-Leitungsendgeräte am 1. Netzknoten generieren nach Empfang des Startadressiertelegramms ein Adressiertelegramm mit 255 im Adreßfeld, 255 in der Adreßerweiterung, der Nummer des Leitungsabschnitts im 3. Byte des Datenfeldes (eigene L-Adresse) und 001 im 4. Byte des Datenfeldes (eigene P-Adresse). Dann senden sie dieses Telegramm über den Anschluß K1, K2 an die nachgeschalteten Prozessoreinheit.

Die nachgeschalteten Prozessoreinheiten in den Zwischenregeneratoren und in den empfangenden Leitungsendgeräten am Ende jedes Leitungsabschnitts 4 erhalten das Adressiertelegramm über einen der Anschlüsse K1, K2. Sie übernehmen das 3. Datenbyte des Adressiertelegramms direkt als eigene L-Adresse, erhöhen das 4. Datenbyte um Eins und übernehmen es dann als eigene P-Adresse.

Das empfangende Leitungsendgerät sendet über seine Anschlüsse K1, K2 keine Adressiertelegramme weiter.

Das Ortungsmodul oder der Personalcomputer ruft nun nacheinander die nun adressierten empfangenden Leitungsendgeräte mit ihrer Adresse auf, die an ihrem Anschluß K4 mit einem weiteren Leitungsabschnitt 4 verbunden sind und veranlaßt sie ein Startadressiertelegramm mit der vorab festgelegten L-Adresse an ihr erstes sendendes Leitungsendgerät zu senden.

Die Adressierung der sendenden Leitungsendgeräte und der Prozessoreinheiten in den Leitungsabschnitten des nächsten Netzknotens erfolgt analog zur Adressierung des ersten Netzknotens.

Für das ordnungsgemäße Funktonieren des Verfahrens ist Voraussetzung, daß die Adressiertelegramme nur zur nächsten Prozessoreinheit weitergegeben, aber nicht zurückgesendet werden.

Der Adressiervorgang eines Leitungsabschnitts 4 nach Austausch eines Leitungsendgerätes oder Zwischenregenerators mit automatischer Adressierung der Adressier-Leitungsendgeräte läuft wie folgt ab:
Nach Austausch eines Adressier-Leitungsendgerätes werden die L-Adressen neu adressiert.
Der Start der Adressenzuweisung erfolgt nach Stecken des neuen Einsatzes und nach automatischer Freigabe durch das Ortungsmodul bzw. den Personalcomputer in einem Zeitschlitz nach einem Aufrufzyklus.

Die Prozessor-Baugruppe des neuen Einsatzes sendet in diesem Zeitschlitz ein Aufforderungstelegramm an das Ortungsmodul oder den Personalcomputer.

Das Aufforderungstelegramm ist ein Langtelegramm mit der Adresse 255 (alle Leitungsabschnitte) im Adreßfeld, mit der Adresse 255 (alle Prozessoreinheiten) in der Adreßerweiterung und mit dem Befehl "Neuadressierung der Leitungsabschnitte" im Organisationsbyte des Datenfeldes.

Nach Empfang dieses Telegramms durch das Ortungsmodul oder den Personalcomputer wird die Neuadressierung des Leistungsabschnittes gestartet.

Das Ortungsmodul oder der Personalcomputer sendet ein Steuerungstelegramm an alle Prozessoreinheiten des Ortungsbereiches. Das Steuerungstelegramm ist ein Langtelegramm mit der Adresse 255 (alle Leitungsabschnitte) im Adreßfeld, mit der Adresse 255 (alle Prozessoreinheiten) in der Adreßerweiterung und mit dem Befehl "Übergang in den Speicherbetrieb" im Organisationsbyte des Datenfeldes.

Alle Prozessoreinheiten geben das Steuerungstelegramm ohne Zwischenspeicherung an die nachgeschalteten Prozessoreinheiten weiter. Zusätzlich kontrollieren sie Adreßfeld und Adreßerweiterung des Telegramms und schalten nach Überprüfung des Organisationsbytes in den Speicherbetrieb um.

Das Ortungsmodul oder der Personalcomputer sendet nun ein Startadressiertelegramm an das erste sendende Leitungsendgerät (Anschluß K3) des ersten Netzknotens. Das Startadressiertelegramm ist ein Langtelegramm mit 255 im Adressfeld, 255 in der Adresserweiterung, Nummer des Leitungsabschnitts im 3. Byte des Datenfeldes (zugewiesene L-Adresse), 001 im 4. Datenbyte des Datenfeldes (P-Adresse) und dem Befehl "Adressier-Leitungsendgerät Adressierung beginnen" im Organisationsbyte des Datenfeldes. Durch dieses Telegramm wird dieses Leitungsendgerät ein Adressier-Leitungsendgerät.

Das Adressier-Leitungsendgerät übernimmt das 3. Datenbyte und das 4. Datenbyte in seinen Adressenspeicher und sendet das Startadressiertelegramm mit um Eins erhöhtem Inhalt des 3. Datenbytes über seinen Anschluß K4 an das nächste Adressier-Leitungsendgesrät (Anschluß K3) des Netzknotens usw.

Es ist vorteilhaft, nach Austausch eines empfangenden Leitungsendgerätes bzw. Zwischenregenerators oder nach Ziehen einer diesen Geräten zugehörenden Prozessor-Baugruppe aus dem Einsatz wegen des damit verbundenen Adressenverlustes, nur alle Prozessoreinheiten eines Leitungsabschnittes neu zu adressieren.

Der Start der Adressenzuweisung innerhalb eines Leitungsabschnittes erfolgt nach Stecken einer Prozessoreinheit in den Einsatz des neu zu adressierenden Leitungsabschnitts und nach automatischer Freigabe durch das Ortungsmodul bzw. den Personalcomputer in einem Zeitschlitz nach einem Aufrufzyklus.

Die in den Einsatz gesteckte Prozessor-Baugruppe sendet in diesem Zeitschlitz ein Steuerungstelegramm über die Anschlüsse K1, K2, K3 und K4 an alle Prozessoreinheiten und das Ortungsmodul bzw. den Personalcomputer in dem Ortungsbereich. Das Steuerungstelegramm ist ein Langtelegramm mit der Adresse 255 (alle Leitungsabschnitte) im Adreßfeld, mit der Adresse 255 (alle Prozessoreinheiten) in der Adreßerweiterung und mit dem Befehl "Übergang in den Speicherbetrieb" im Organisationsbyte des Datenfeldes.

Alle Prozessoreinheiten im Normalbetrieb geben ein Steuerungstelegramm ohne Zwischenspeicherung an die nachgeschalteten Prozessoreinheiten weiter. Zusätzlich kontrollieren sie Adreßfeld und Adreßerweiterung des Telegramms und schalten nach Auswertung des Organisationsbytes in den Speicherbetrieb um.

Nach Empfang des Steuerungstelegramms gibt das Ortungsmodul bzw. der Personalcomputer einen für den Adressiervorgang ausreichenden Zeitschlitz frei.

Die Prozessoreinheit sendet nun ein Startadressiertelegramm an die Prozessoreinheiten seines Leitungsabschnittes.

Das Startadressiertelegramm ist ein Langtelegramm mit der Adresse 255 (alle Leitungsabschnitte) im Adreßfeld, mit der Adresse 255 (alle Prozessoreinheiten) in der Adreßerweiterung und mit dem Befehl "Eigenes Adressier-Leitungsendgerät Adressierung beginnen" im Organisationsbyte des Datenfeldes.

Ein Adressier-Leitungsendgerät führt den Befehl "Eigenes Adressier-Leitungsendgerät Adressierung beginnen" nur aus, wenn es diesen Befehl in einem Telegramm über den Anschluß K1, K2 erhält. Erhält es diesen Befehl in einem Telegramm über den Anschluß K3, K4, so verwirft es dieses Telegramm.

Die Adressier-Leitungsendgeräte generieren nach Empfang des Startadressiertelegramms ein Adressiertelegramm mit 255 im Adreßfeld, 255 in der Adreßerweiterung, der Nummer des Leitungsabschnittes im 3. Byte des Datenfeldes (eigene L- Adresse) und 001 im 4. Byte des Datenfeldes (eigene P-Adresse). Dann senden sie dieses Telegramm an die nachgeschalteten Prozessoreinheiten.

Die nachgeschalteten Prozessoreinheiten in den Zwischenregeneratoren und in den empfangenden Leitungsendgeräten am Ende jedes Leistungsabschnittes erhalten das Adressiertelegramm über einen der Anschlüsse K1, K2. Sie übernehmen das 3. Datenbyte des Adressiertelegramms direkt als eigene L-Adresse, erhöhen das 4. Datenbyte um Eins und übernehmen es dann als eigene P-Adresse. Anschließend wird der Inhalt der eigenen Adressenspeicher in das 3. und 4. Datenbyte eines neuen Adressiertelegramms eingesetzt und dieses über die Anschlüsse K1, K2 zur Prozessor-Baugruppe im nächsten Zwischenregenerator weitergesendet. Der Adressiervorgang ist beendet, wenn das empfangende Leitungsendgerät dieses Leitungsabschnittes adressiert ist. Das Adressiertelegramm wird nur innerhalb des Leitungsabschnittes 4 über die Anschlüsse K1, K2 weitergegeben.

Für das ordnungsgemäße Funktonieren des Verfahrens ist Voraussetzung, daß die Adressiertelegramme nur zur nächsten Prozessoreinheit weitergegeben, aber nicht zurückgesendet werden.

In den beschriebenen Fällen ist jeweils neben der automatischen Adreßgenerierung ist eine manuelle, lokale Adreßeingabe über einen an die Prozessoreinheit angeschlossenen Personalcomputer möglich.

Die Figuren 7 bis 9 zeigen drei Arten von Prozessoreinheiten im Prinzip. Die in Fig. 7 dargestellte Prozessoreinheit hat den Vorteil, daß sie diese drei Arten in sich vereinigt.

Die in Fig. 7 gezeigte Prozessoreinheit besitzt zur Übertragung von Telegrammen zwei Vierdrahtanschlüsse K1, K2 und die beiden bidirektionalen Busanschlüsse K3, K4. Sie kann damit sowohl in einem Leitungsendgerät 1 als auch in einem Zwischenregenerator 2 eingesetzt werden.

Der vierdrähtige Anschluß K1 hat einen Eingang E1 und einen Ausgang A1 zum Anschluß eines ersten vierdrähtigen Datenkanals, der Anschluß K2 einen Eingang E2 und einen Ausgang A2 für einen zweiten vierdrähtigen Datenkanal, der Anschluß K3a einen Eingang E3 und einen Ausgang A3 zum Anschluß eines dritten vierdrähtigen Datenkanals, und der Anschluß K4a einen Eingang E4 und einen Ausgang A4 zum Anschluß eines vierten vierdrähtigen Datenkanals.

Zwischen dem Vierdraht-Anschlußpaar E3, A3 und dem Busanschluß K3, d.h. zwischen den Anschlüssen K3a und K3, zum Anschluß eines ersten bidirektionalen Busses liegt der Sende-Empfangs-Baustein 10. Der Steuereingang dieses Sende- und Empfangs-Bausteins 10, über den sich der als Sender dienende Treiber D aktivieren läßt, ist an den Ausgang des ODER-Gliedes 15 angeschlossen.

Zwischen dem Vierdraht-Anschlußpaar E4, A4 und dem Busanschluß K4, d.h. zwischen den Anschlüssen K4a und K4, zum Anschluß eines zweiten bidirektionalen Busses liegt der Sende-Empfangs-Baustein 40, der aus dem Treiber D und dem Empfänger R besteht. Der Steuereingang dieses Sende- und Empfangs-Bausteins 40, über den sich der Treiber D aktivieren läßt, ist an den Ausgang des ODER-Gliedes 45 angeschlossen. Der Empfänger R ist ständig aktiviert.

Jeder der vier Ausgänge A1, A2, A3, A4 läßt sich über einen durch den Mikroprozessor 35 steuerbaren Umschalter 13, 19, 43 bzw. 37 wahlweise an den Ausgang eines ODER-Gliedes 11, 17, 41, 39, an einen Zieh- bzw. Pull-up-Widerstand 12, 18, 42 bzw. 38 oder an den Ausgang des Parallel-Serien-Wandlers 26 anschließen. Dieser Parallel-Serien-Wandler 26 ist mit seinem Paralleleingang an den Port PO des Mikroprozessors 35 angeschlossen.

Der Mikroprozessor 35 steuert den Umschalter 13 über die zweiadrige Steuerleitung St4, den Umschalter 19 über die zweiadrige Steuerleitung St1, den Umschalter 43 über die zweiadrige Steuerleitung St8 und den Umschalter 37 über die zweiadrige Steuerleitung St7.

Die Ausgänge der ODER-Glieder 11, 17, 41, 39, führen über die Umschalter 13, 19, 43, 37 jeweils an einen der Ausgänge A1, A2, A3, A4. Ihre Eingänge sind jeweils mit den Eingängen der drei anderen Vierdrahtanschlußpaare verbunden.

In der Verbindungsleitung zwischen dem Eingang E3 und den Eingängen der ODER-Glieder 17, 41, 39 ist der Schalter 16 eingefügt. Die Steuerleitung des Schalters 16 ist mit dem Ausgang des ODER-Gliedes 15 verbunden.

In der Verbindungsleitung zwischen dem Eingang E4 und den Eingängen der ODER-Glieder 11, 17, 39 ist der Schalter 46 eingefügt. Die Steuerleitung des Schalters 46 ist mit dem Ausgang des ODER-Gliedes 45 verbunden.

Der Ausgang des ODER-Gliedes 11 ist über die Vorrichtung 14a zur Flankenerkennung und die dieser in Kette geschalteten Zeitschaltung 14b an einen Eingang des ODER-Gliedes 15 geführt. Der andere Eingang des ODER-Gliedes 15 ist an die vom Mikroprozessor 35 kommende Steuerleitung St3 angeschlossen. Der Steuereingang der Vorrichtungen 14a, 14b ist an die vom Mikroprozessor 35 kommende Steuerleitung St5 angeschlossen.

Der Ausgang des ODER-Gliedes 41 ist über die Vorrichtung 44a zur Flankenerkennung und die dieser in Kette geschalteten Zeitschaltung 44b an einen Eingang des ODER-Gliedes 45 geführt. Der andere Eingang des ODER-Gliedes 45 ist an die vom Mikroprozessor 35 kommende Steuerleitung St10 angeschlossen. Der Steuereingang der Vorrichtungen 44a, 44b ist an die vom Mikroprozessor 35 kommende Steuerleitung St9 angeschlossen.

Die Eingänge E1, E2, E3, E4 sind jeweils mit einem Eingang eines der Serien-Parallel-Wandler 24, 25, 27, 28 verbunden. Die Ausgänge der Serien-Parallel-Wandler 24, 25, 27, 28 sind über den 8-Bit-Parallel-Bus 31 mit dem Mikroprozessor 35 verbunden. Der Signalsammler 20 ist ebenfalls an den Bus 31 angekoppelt, und zwar über den Interface-Baustein 21 mit dem Serien-Parallel-Wandler 22 und dem Parallel-Serien-Wandler 23.

Die Serien-Parallel-Wandler 22, 24, 25, 27, 28 sowie die Parallel-Serien-Wandler 23, 26 sind in UART-Bausteinen enthalten und unterbrechen bei Bedarf das Programm des Mikroprozessors 35 über den an den Interrupteingang Int O angeschlossenen Interrupt-Baustein 30. Sie sind über den Bus 31 an den Port PO des Mikroprozessors 35 angeschlossen und werden von dem Mikroprozessor 35 über den Chip-Select-Baustein 29 ausgewählt.

An den Port PO des Mikroprozessors 35 ist außerdem der Codierschalter 51 über den Schalter 50 angeschlossen, mit dessen Hilfe die Prozessoreinheit auf eine Adresse und auf die Funktion eines Adressier-LE eingestellt werden kann.

An den Mikroprozessor 35 sind außerdem noch das als Datenspeicher dienende RAM 32, das als Programmspeicher dienende EPROM 33, das als nicht flüchtiger Datenspeicher dienende EEPROM 34 und der Baustein 36 zur Eigenüberwachung angeschlossen.

Die Datenübertragung im Normalbetrieb läuft wie folgt ab:
Die Telegramme vom Eingang E1, E3 oder E4 werden über das ODER-Glied 17 und den Umschalter 19 direkt zum Ausgang A2 weitergegeben. Daten vom Eingang E3 durchlaufen zusätzlich den Schalter 16, Daten vom Eingang E4 durchlaufen zusätzlich den Schalter 46.

Daten, die am Eingang E2, E3 oder E4 ankommen, gelangen über das ODER-Glied 39 und den Umschalter 37 zum Ausgang A1. Daten vom Eingang E3 durchlaufen zusätzlich den Schalter 16, Daten vom Eingang E4 durchlaufen zusätzlich den Schalter 46.

Daten, die am Eingang E1, E2 oder E4 ankommen, gelangen über das ODER-Glied 11 und den Umschalter 13 an den Treiber D des Sende-Empfangs-Bausteins 10 und von diesem an den Busanschluß K3. Hierzu muß sich der Umschalter 13 in der gezeigten Normalstellung befinden und der Treiber D aktiviert sein. Der Treiber D wird aktiviert, wenn die Vorrichtung 14a eine Anstiegsflanke erkennt und das ODER-Glied 15 über die Vorrichtung 14a, 14b und/oder über die Steuerleitung St3 vom Mikroprozessor 35 ein entsprechendes Steuerpotential erhält.

Werden im Normalbetrieb Daten über das ODER-Glied 11 zum Busanschluß K3 geleitet, so werden diese Daten auch in die Vorrichtung 14a zur Flankenerkennung eingespeist.

Erkennt die Vorrichtung 14a zur Flankenerkennung die Anstiegsflanke des ersten Bits eines Telegramms, so startet sie die Zeitschaltung 14b. Diese Zeitschaltung gibt einen Ausgangsimpuls ab, der unabhängig von der Bitfolge ist, die am Eingang der Vorrichtung 14a zur Flankenerkennung ankommt. Der Ausgangsimpuls gelangt über das ODER-Glied 15 zum Sende-Empfangs-Baustein 10 und schaltet sofort den Treiber D ein. Daten, die an einem der Eingänge E1, E2 oder E4 ankommen, werden so durch das Erkennen einer ansteigenden Flanke sofort an den Busanschluß K3 weitergegeben. Die am Busanschluß K3 ausgesendeten Daten werden vom Empfänger R empfangen aber in dem vom ODER-Glied 15 geöffneten Schalter 16 gesperrt.

Daten, die am Eingang E1, E2 oder E3 ankommen, gelangen über das ODER-Glied 41 und den Umschalter 43 an den Treiber D des Sende-Empfangs-Bausteins 40 und von diesem an den Busanschluß K4. Hierzu muß sich der Umschalter 43 in der gezeigten Normalstellung befinden und der Treiber D aktiviert sein. Der Treiber D wird aktiviert, wenn das ODER-Glied 45 über die Vorrichtung 44a, 44b und/oder über die Steuerleitung St10 vom Mikroprozessor 35 ein entsprechendes Steuerpotential erhält.

Werden im Normalbetrieb Daten über das ODER-Glied 41 zum Busanschluß K4 geleitet, so werden diese Daten auch in die Vorrichtung 44a zur Flankenerkennung eingespeist. Erkennt die Vorrichtung 44a zur Flankenerkennung die Anstiegsflanke des ersten Bits eines Telegramms, so startet sie die Zeitschaltung 44b. Diese Zeitschaltung gibt einen Ausgangsimpuls ab, der unabhängig von der Bitfolge ist, die am Eingang der Vorrichtung 44a zur Flankenerkennung ankommt. Der Ausgangsimpuls gelangt über das ODER-Glied 45 zum Sende-Empfangs-Baustein 40 und schaltet sofort den Treiber D ein. Daten, die an einem der Eingänge E1, E2 oder E3 der Prozessoreinheit 6 ankommen, werden so durch das Erkennen einer ansteigenden Flanke sofort an den Busanschluß K4 weitergegeben. Die am Busanschluß K4 ausgesendeten Daten werden vom Empfänger R empfangen aber in dem vom ODER-Glied 45 geöffneten Schalter 46 gesperrt.

Alle Daten, die an den Eingängen E1, E2, E3, E4 ankommen, werden dem Mikroprozessor 35 zur Verarbeitung übertragen.
Daten, die am Eingang E1 ankommen, gelangen über den Serien-Parallel-Wandler 25, Daten vom Eingang E2 über den Serien-Parallel-Wandler 27, Daten vom Eingang E3 über den Serien-Parallel-Wandler 24 und Daten vom Eingang E4 über den Serien-Parallel-Wandler 28 zum Mikroprozessor 35.

Die Serien-Parallel-Wandler 24, 25, 27, 28 nehmen die Daten byteweise auf und senden immer dann einen Interrupt-Impuls über den Interrupt-Baustein 30 an den Mikroprozessor 35, wenn ein Byte vollständig eingelesen ist, dieses die Start-, Stop- und Parity-Bedingungen erfüllt und es über den Bus 31 am Port PO vom Mikroprozessor 35 übernommen werden kann.

Stellt der Mikroprozessor 35 fest, daß die Daten von den Eingängen E1, E2 oder E4 vorgegebene Forderungen erfüllen, dann aktiviert er die Steuerleitung St3. Hierdurch aktiviert der Mikroprozessor 35 über das ODER-Glied 15 nach Ablauf der durch die Zeitschaltung 14b vorgegebene Zeitspanne den Treiber D im Interface- bzw. Sende-Empfangs- Baustein 10.

Stellt der Mikroprozessor 35 fest, daß die Daten von den Eingängen E1, E2 oder E3 vorgegebene Forderungen erfüllen, aktiviert er die Steuerleitung St10. Hierdurch übernimmt der Mikroprozessor 35 über das ODER-Glied 45 nach Ablauf der durch die Zeitschaltung 44b vorgegebene Zeitspanne die Aktivierung des Treibers D im Interface-Baustein 40.

Im Normalbetrieb dürfen zur gleichen Zeit nur über einen der Eingänge E1, E2, E3, E4 Daten übertragen werden, anderenfalls werden diese in den ODER-Gliedern 11, 17, 41, 39 überlagert und damit verfälscht.

Durch einen Befehl "Übergang in den Speicherbetrieb" im Steuerungstelegramm des Personalcomputers 8 kann die Prozessoreinheit veranlaßt werden, in den Speicherbetrieb überzugehen.

Das Steuerungstelegramm mit dem Befehl "Übergang in den Speicherbetrieb" durchläuft sämtliche Prozessoreinheiten im Normalbetrieb. Parallel dazu verarbeitet der Mikroprozessor 35 in jeder Prozessoreinheit jeweils das Steuerungstelegramm und geht nach dessen Auswertung in den Speicherbetrieb über.

Stellt der Mikroprozessor 35 bei der Auswertung eines Telegrammes fest, daß vorgegebene Anforderungen nicht erfüllt wurden, so veranlaßt er die Prozessor-Einheit, in einen Speicherbetrieb überzugehen.

Im Speicherbetrieb werden die Daten, die an den Eingängen E1, E2, E3, E4 anstehen, dem Mikroprozessor über die Serien-Parallel-Wandler 24, 25, 27, 28 zur Verarbeitung zugeführt. Nach der Verarbeitung aktiviert der Mikroprozessor 35 je nach Telegrammart verfahrensgemäß eine bis drei der Steuerleitungen St1, St4, St7, St8. Dadurch gelangen die im Mikroprozessor 35 verarbeiteten Daten, die der Parallel-Serien-Wandler 26 abgibt, über einen bis drei der Umschalter 13, 19, 43, 47 an einen bis drei der Ausgänge K1, K2, K3 und K4, und zwar nur an Ausgänge der Anschlüsse, an denen das Telegramm nicht empfangen wurde.

Jeder Eingang E1, E2, E3, E4 ist an einen eigenen Serien-Parallel-Wandler 24, 25, 27, 28 angeschaltet. Der Mikroprozessor 35 erkennt durch die Interrupt-Impulse, über welchen der Eingänge Daten eingespeist werden.

Die Steuerleitungen St1, St4, St7, St8 werden vom Mikroprozessor so aktiviert, daß von den Ausgängen A1, A2, A3, A4 diejenigen, über die nicht gesendet wird, mit Hilfe der Ziehwiderstände 12, 18, 42, 48 über die Umschalter 13, 19, 43, 47 auf High-Potential gelegt werden.

Die Startadressiertelegramme durchlaufen sämtliche Prozessoreinheiten im Normalbetrieb. Parallel dazu verarbeitet der Mikroprozessor 35 jeweils die Startadressiertelegramme und geht in den Speicherbetrieb über.

Beim Adressieren darf vom Prozessor über den Parallel-Serien-Wandler 25 das Adressiertelegramm nur weitergegeben und nicht in beide Richtungen gleichzeitig gesendet werden. Die am Eingang E1 ankommenden Daten werden im Serien-Parallel-Wandler 23, die am Eingang E2 ankommenden Daten im Serien-Parallel-Wandler 27 verarbeitet. Der Mikroprozessor 35 erkennt also, aus welcher Richtung die Daten kommen. Im Speicherbetrieb werden daher die Steuerleitungen St1 und die Steuerleitungen St7 so aktiviert, daß der Ausgang A1 oder A2, über den nicht gesendet wird, über den Umschalter 19 oder 47 und den Zieh- bzw. Pull-up-Widerstand 18 bzw. 48 auf High-Potential gelegt wird.

Der Signalsammler 20 ist über den Interface-Baustein 21 und den Serien-Parallel-Wandler 22 und den Parallel-Serien-Wandler 23 an den Mikroprozessor 35 angeschlossen.

Der Signalsammler 20 liefert über den Interface-Baustein 21 die Überwachungsdaten des überwachten Zwischenregenerators oder des überwachten Leitungsendgerätes an den Mikroprozessor 35 und erhält gegebenenfalls die in einem Aufruftelegramm des Ortungsmoduls enthaltenen Steuerinformationen zur Weitergabe an eine nicht dargestellte Signal-Sammeleinrichtung.

Je nach Einsatz der Prozessoreinheit im Leitungsendgerät oder Zwischenregenerator werden die Überwachungsdaten vom Prozessor 35 über den Parallel-Serien-Wandler 26, über drei von vier Umschaltern 13, 19, 43, 47 zu drei von vier Ausgängen A1, A2, A3, A4 übertragen und über drei von vier Anschlüssen K1, K2, K3, K4 ausgesendet.

Sind an einem Netzknoten mehrere Anschlüsse K3 über einem bidirektionalen Bus miteinander verbunden, so ergibt sich folgender Ablauf für das Ein- und Ausschalten eines Bustreibers:

Im Ruhezustand sind alle Treiber inaktiv und haben einen hochohmigen Ausgang. Wenn am Anschluß K1 oder K2 Daten ankommen, wird durch die Flanke des Startbits das Zeitglied 14b gestartet, das den Treiber für mindestens zwei Zeichen aktiviert. Das weitere Halten und Ausschalten übernimmt dann der Mikroprozessor 35, dem die Daten parallel zugeführt wurden.

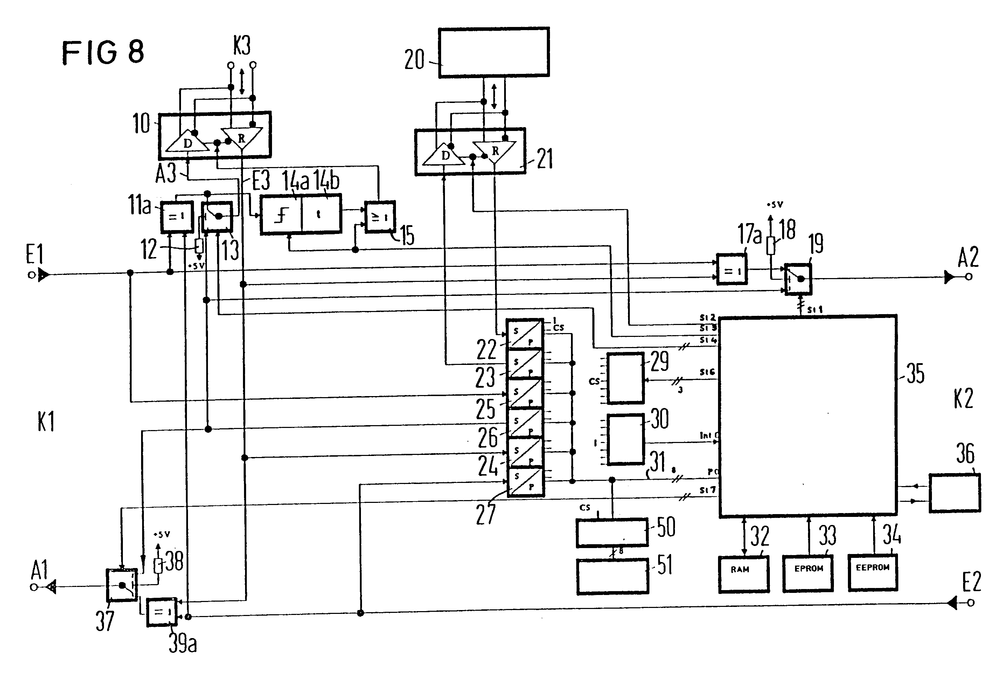

Die in Fig. 8 gezeigte Prozessoreinheit stimmt mit der nach Fig. 7 weitgehend überein. Abweichend ist kein Busanschluß K4 vorgesehen. Mit ihm fehlen die Schaltmittel 40, 41, 42, 43, 44a, 44b, 45, 46 und 28. Anstelle der Dreifach-ODER-Glieder 11, 17 und 39 in Fig. 7 sind die Zweifach-Exklusiv-ODER-Glieder 11a, 17a und 39a vorgesehen.

Der Ausgang des Exklusiv-ODER-Gliedes 11a ist über die Vorrichtung 14a zur Flankenerkennung und die dieser in Kette geschaltete Vorrichtung 14b an den einen Eingang des ODER-Gliedes 15 geführt. Der andere Eingang des ODER-Gliedes 15 ist zusammen mit einem Steuereingang der Einrichtungen 14a und 14b an die vom Mikroprozessor 35 kommende Steuerleitung St3 angeschlossen.

Der Steuereingang des Sende- und Empfangs-Bausteins 10 ist wie nach Fig. 7 an den Ausgang des ODER-Gliedes 15 angeschlossen. Abweichend von Fig. 7 läßt sich mit Hilfe des an den Steuereingang gelegten Steuersignals wahlweise der Treiber D oder der Empfänger R aktivieren. Der Ausgangsimpuls gelangt über das ODER-Glied 15 zum Sende-Empfangs-Baustein 10 und schaltet sofort den Treiber D ein und den Empfänger R aus.

Im Normalbetrieb werden die Telegramme vom Dateneingang E1 über das Exklusiv-ODER-Glied 17a und den Umschalter 19 direkt zum Ausgang A2 weitergegeben. In der Rückrichtung gelangen die Telegramme vom Eingang E2 über das Exklusiv-ODER-Gied 39a und den Schalter 37 zum Ausgang A1.

Das Exklusiv-ODER-Glied 11a, 17a bzw. 39a sorgt dafür, daß keine Daten übertragen werden, wenn Daten gleichzeitig an den Eingängen E1 und E2 bzw. E1 und E3 bzw. E2 und E3 ankommen. Da bei fehlerfreiem Betrieb keine Daten gleichzeitig am Eingang E1, E2 und E3 ankommen dürfen, werden durch die Exklusiv-ODER-Glieder 11a, 49a und 17a Daten nur im Fehlerfall gesperrt.

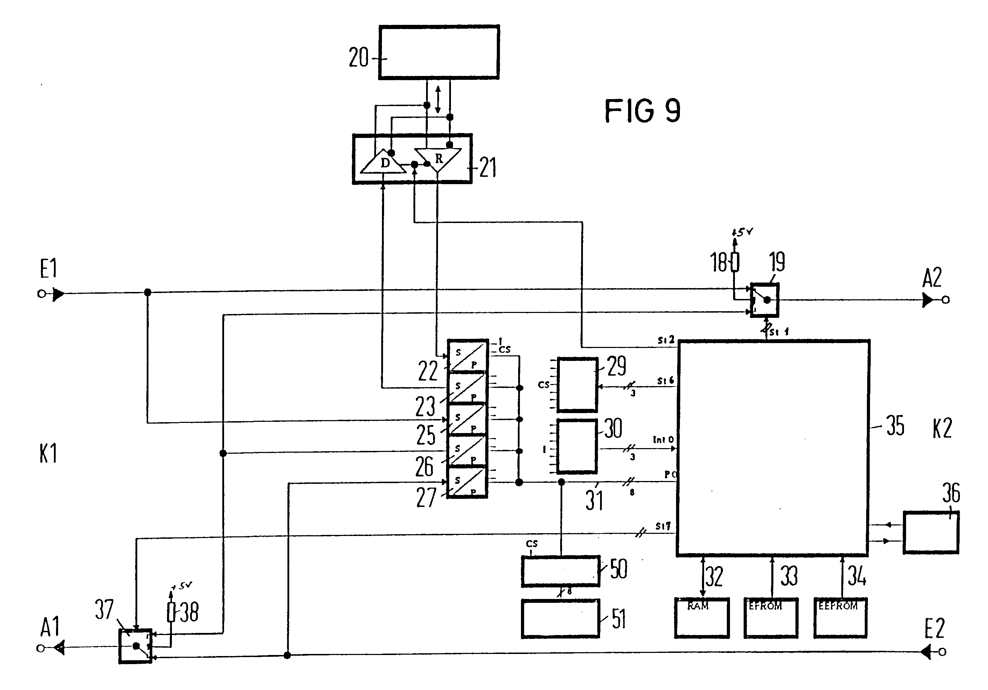

Die in Fig. 9 gezeigte Prozessoreinheit stimmt mit der nach Fig. 8 Weitgehend überein. Abweichend ist kein Busanschluß K3 vorgesehen. Mit ihm fehlen die Schaltmittel 10, 11a, 12, 14a, 14b, 15, 17a, 39a und 24. Die Prozessoreinheit ist zum Einsatz in einem Zwischenregenerator bestimmt und hat außer den Vierdrahtanschlüssen K1 und K2 nur einen Anschluß für den örtlichen Signalsammler 20.

## Patentansprüche

1. Verfahren zur Adressierung von zur Überwachung und/oder Steuerung einer Nachrichtenübertragungseinrichtung dienenden Prozessoreinheiten, wobei wenigstens eine Überwachungseinheit (7, 8) und mit Adressen versehene Prozessoreinheiten (6), die End- und/oder Zwischenstellen einer Nachrichtenübertragungseinrichtung angehören, im Normalbetrieb über ein wenigstens einen In-Betrieb-Überwachungskanal eines Übertragungsabschnittes (4) enthaltendes Telegrammübertragungsnetz derart Informationen miteinander austauschen, daß Abfragetelegramme der Überwachungseinheit und Überwachungsdaten enthaltende Antworttelegramme der Prozessoreinheiten (6) übertragen werden,
**dadurch gekennzeichnet,**
daß die Prozessoreinheiten dadurch mit individuellen Adressen versehen werden, daß eine an das eine der beiden Enden des jeweiligen Übertragungsabschnittes (4) angeschlossene und im Adressierbetrieb als Adressiereinheit dienende Prozessoreinheit (6) ein Adressiertelegramm an den betreffenden Übertragungsabschnitt (4) abgibt, das eine Adressiertelegramm-Kennung und eine Adresse enthält, und daß die Prozessoreinheiten (6) des Übertragungsabschnittes (4) die Adressiertelegramme und/oder ein neues Adressiertelegramm nach einer Inkrementierung der im Adressiertelegramm enthaltenden Adresse an die nachfolgenden Prozessoreinheiten (6) weitergeben und daß die Prozessoreinheit (6) des Übertragungsabschnittes die Adresse des empfangenen oder ausgesendeten Adressiertelegrammes jeweils als ihre eigene Adresse speichert.

2. Verfahren nach Anspruch 1,
**dadurch gekennzeichnet,**
daß die Prozessoreinheiten (6) die Adressiertelegramme durchschalten und danach das neue Adressiertelegramm zusätzlich aussenden.

3. Verfahren nach Anspruch 1,
**dadurch gekennzeichnet,**
daß die Prozessoreinheiten (6) im Adressierbetrieb empfangene Adressiertelegramme nicht weiterleiten, sondern nur das neue Adressiertelegramm an die nächste Prozessoreinheit (6) weitergeben.

4. Verfahren nach einem der Ansprüche 1 bis 3,
**dadurch gekennzeichnet,**
daß das Telegrammübertragungsnetz mehrere Übertragungsabschnitte (4) umfaßt und daß die Adressen der Prozessoreinheiten (6) aus einer ersten Teiladresse für den jeweiligen Übertragungsabschnitt (4) und einer zweiten Teiladresse für die Ordnungsnummer der Prozessoreinheit (6) im Übertragungsabschnitt enthalten und daß die Prozessoreinheiten (6) vor der Weitergabe des neuen Adressiertelegramms nur die zweite Teiladresse inkrementieren.

5. Verfahren nach Anspruch 4,
**dadurch gekennzeichnet,**
daß bei mehreren in Kette geschalteten Übertragungsabschnitten (4a...4z) die Prozessoreinheit (6), die sich an dem der Adressiereinheit gegenüberliegenden Ende des Übertragungsabschnittes befindet, oder die erste Prozessoreinheit (6) des darauffolgenden Übertragungsabschnittes sowohl die erste als auch die zweite Teiladresse inkrementiert.

6. Verfahren nach Anspruch 4,
**dadurch gekennzeichnet,**
daß bei mehreren in Kette geschalteten Übertragungsabschnitten (4a...4z) die Prozessoreinheit (6), die sich an dem der Adressiereinheit gegenüberliegenden Ende des Übertragungsabschnittes befindet, oder die erste Prozessoreinheit (6) des darauffolgenden Übertragungsabschnittes die erste Teiladresse inkrementiert und die zweite Teiladresse auf einen Anfangswert (001) zurücksetzt.

7. Verfahren nach einem der Ansprüche 1 bis 4,
**dadurch gekennzeichnet,**
daß das Telegrammübertragungsnetz ein aus mehreren, jeweils mindestens einen Übertragungsabschnitt (4) enthaltenden Liniennetzen zusammengesetztes Netz mit Stern-Abzweig-Struktur ist und daß an den Netzknoten befindliche Adressiereinheiten im ersten Adressenteil jeweils auf eine vorgegebene Adresse voreingestellt sind und bei Empfang eines Startadressiertelegramms ein Adressiertelegramm abgegeben, das im ersten Adressenteil die voreingestellte Adresse des betreffenden Übertragungsabschnittes und im zweiten Adressenteil die eigene Ordnungsnummer im betreffenden Übertragungsabschnitt (4) ist.

8. Schaltungsanordnung zur Adressierung von zur Überwachung und/oder Steuerung einer Nachrichtenübertragungseinrichtung dienenden Prozessoreinheiten, wobei wenigstens eine Überwachungseinheit (7, 8) und mit Adressen versehene Prozessoreinheiten, die End- und/oder Zwischenstellen einer Nachrichtenübertragungseinrichtung angehören, über ein wenigstens einen In-Betrieb-Überwachungskanal eines Übertragungsabschnittes (4) enthaltendes Telegrammübertragungsnetz miteinander verbunden sind und die Überwachungseinheit eine Vorrichtung zum Aussenden von Abfragetelegrammen und die Prozessoreinheiten (6) eine Vorrichtung zum Aussenden von Überwachungsdaten enthaltenden Antworttelegrammen aufweisen, zur Durchführung des Verfahrens nach Anspruch 1,
**dadurch gekennzeichnet,**
daß an das eine der beiden Enden des jeweiligen Übertragungsabschnittes (4) eine im Adressierbetrieb als Adressiereinheit dienende Prozessoreinheit angeschlossen ist, die eine Vorrichtung zum Aussenden von Adressiertelegrammen enthält, und daß die Prozessoreinheiten des Übertragungsabschnittes eine Vorrichtung zur Weitergabe der Adressiertelegramme und/oder von neuen Adressiertelegrammen, eine Vorrichtung zur Inkrementierung der in einem empfangenen Adressiertelegramm enthaltenen Adresse und einen Adressenspeicher zur Speicherung der Adresse des empfangenen oder ausgesendeten Adressiertelegrammes enthalten.

9. Schaltungsanordnung nach Anspruch 8,
**dadurch gekennzeichnet,**
daß zur Durchführung des Verfahrens nach Anspruch 7 an einem Netzknoten (N1...N6) des Telegrammübertragungsnetzes wenigstens zwei in Kaskade geschaltete Prozessoreinheiten vorgesehen sind (Fig. 5, 6).

10. Verfahren nach einem der Ansprüche 1 bis 4,
**dadurch gekennzeichnet,**
daß das Telegrammübertragungsnetz ein aus mehreren jeweils mindestens einen Übertragungsabschnitt (4) enthaltenden Liniennetzen zusammengesetztes Netz mit Stern-Abzweig-Struktur ist und daß an den Netzknoten (N1...N6) befindliche Prozessoreinheiten nach Empfang eines Adressiertelegramms über die Kaskade durch den ersten Adressenteil auf eine Adresse einstellbar sind und bei Empfang eines Startadressiertelegramms ein Adressiertelegramm abgegeben, das im ersten Adressenteil die eingestellte Adresse des betreffenden Übertragungsabschnittes und im zweiten Adressenteil die eigene Ordnungsnummer im betreffenden Übertragungsabschnitt ist (Fig. 5, 6).

11. Verfahren nach einem der Ansprüche 1 bis 7 oder nach Anspruch 10,
**dadurch gekennzeichnet,**
daß die Prozessoreinheiten (6) beim Stecken der betreffenden Baueinheit in einen Zustand überführt werden, in dem sie während einer im Anschluß an den Aufrufzyklus jeweils vorgesehenen Zeitlücke ein Aufforderungstelegramm aussenden, wodurch die jeweils zugeordnete Adressiereinheit zum Aussenden eines Adressiertelegramms veranlaßt wird.

12. Verfahren nach Anspruch 11,
**dadurch gekennzeichnet,**
daß beim Austausch einer Prozessoreinheit (6), die keine Adressiereinheit ist, die Aufrufeinheit durch ein Aufforderungstelegramm veranlaßt wird, der Zeitlücke eine für den Adressiervorgang ausreichende Dauer zu geben.

13. Schaltungsanordnung nach Anspruch 8,
**dadurch gekennzeichnet,**
daß die Prozessoreinheit (6) derart ausgebildet ist, daß sie in einer ersten Betriebsart (Normalbetrieb) Telegramme durchschaltet und in einer zweiten Betriebsart (Speicherbetrieb) empfangene Telegramme erst nach einer Speicherung, insbesondere nach einer Verarbeitung, weitergibt.

## Claims

1. Process for addressing processing units used for monitoring and/or controlling an information transmission facility, at least one monitoring unit (7, 8) and processing units (6) provided with addresses, which belong to terminal stations and/or intermediate stations of an information transmission facility, exchanging information with one another via a message transmission network containing at least one in-service monitoring channel of a transmission section (4) in normal operation, in such a manner that interrogation messages of the monitoring unit and response messages, containing monitoring data, of the processing units (6) are transmitted, characterised in that the processing units are provided with individual addresses by the fact that a processing unit (6) connected to one of the two ends of the respective transmission section (4) and used as addressing unit in addressing mode outputs an addressing message to the relevant transmission section (4), which contains an addressing message identification and an address, and in that the processing units (6) of the transmission section (4) forward the addressing messages and/or a new addressing message after an incrementation of the address contained in the addressing message to the subsequent processing units (6), and in that the processing unit (6) of the transmission section in each case stores the address of the received or transmitted addressing message as its own address.

2. Process according to Claim 1, characterised in that the processing units (6) switch through the addressing messages and then additionally send out the new addressing message.

3. Process according to Claim 1, characterised in that the processing units (6) do not forward addressing messages received in addressing mode, but only the new addressing message to the next processing unit (6).

4. Process according to one of Claims 1 to 3, characterised in that the message transmission network comprises several transmission sections (4), and in that the addresses of the processing units (6) consist of a first subaddress for the respective transmission section (4) and a second subaddress for the ordinal number of the processing unit (6) in the transmission section, and in that the processing units (6) only increment the second subaddress before forwarding the new addressing message.

5. Process according to Claim 4, characterised in that, when several transmission sections (4a...4z) are connected in a chain, the processing unit (6) which is located at the end of the transmission section opposite to the addressing unit, or the first processing unit (6) of the subsequent transmission section, increments both the first and the second subaddress.

6. Process according to Claim 4, characterised in that, when several transmission sections (4a...4z) are connected in a chain, the processing unit (6) which is located at the end of the transmission section opposite to the addressing unit, or the first processing unit (6) of the subsequent transmission section, increments the first subaddress and resets the second subaddress to a starting value (001).

7. Process according to one of Claims 1 to 4, characterised in that the message transmission network is a network composed of a number of line networks in each case containing at least one transmission section (4) with a star branch structure, and in that addressing units located at the network nodes are in each case preset to a predetermined address in the first address part and, when receiving a start addressing message, output an addressing message which is the preset address of the relevant transmission section in the first address part and is its own ordinal number in the relevant transmission section (4) in the second address part.

8. Device for addressing processing units used for monitoring and/or controlling an information transmission facility, wherein at least one monitoring unit (7, 8) and processing units provided with addresses, which belong to terminal stations and/or intermediate stations of an information transmission facility, are connected to one another via a message transmission network containing at least one in-service monitoring channel of a transmission section (4), and the monitoring unit exhibits a device for sending out interrogation messages and the processing units (6) exhibit a device for sending out response messages containing monitoring data, for carrying out the process according to Claim 1, characterised in that a processing unit which contains a device for sending out addressing messages and which is used as addressing unit in addressing mode is connected to one of the two ends of the respective transmission section (4), and in that the processing units of the transmission section contain a device for forwarding the addressing messages and/or new addressing messages, a device for incrementing the address contained in a received addressing message and an address memory for storing the address of the received or transmitted addressing message.

9. Device according to Claim 8, characterised in that at least two cascaded processing units are provided at a network node (N1...N6) of the message transmission network for carrying out the process according to Claim 7 (Fig. 5, 6).

10. Process according to one of Claims 1 to 4, characterised in that the message transmission network is a network composed of several line networks in each case containing at least one transmission section (4) with a star branch structure and in that processing units located at the network nodes (N1...N6) can be adjusted to an address by the first address part after reception of an addressing message via the cascade and, after receiving a start addressing message output an addressing message which is the set address of the relevant transmission section in the first address part and is its own ordinal number in the relevant transmission section in the second address part (Fig. 5, 6).

11. Process according to one of Claims 1 to 7 or according to Claim 10, characterised in that the processing units (6), when the relevant constructional unit is inserted, are placed into a state in which they send out a request message during a time interval in each case provided following the call cycle, by means of which request message the in each case associated addressing unit is caused to send out an addressing message.

12. Process according to Claim 11, characterised in that, when a processing unit (6) is exchanged which is not an addressing unit, a request message causes the call unit to provide the time interval with a duration which is adequate for the addressing process.

13. Device according to Claim 8, characterised in that the processing unit (6) is constructed in such a manner that it switches through messages in a first operating mode (normal mode) and only forwards received messages in a second operating mode (storage mode) after storage, especially after processing.

## Revendications

1. Procédé pour l'adressage d'unités à processeur servant à contrôler et/ou à commander un dispositif de transmission d'informations, selon lequel au moins une unité de contrôle (7,8) et des unités à processeur (6) pourvues d'adresses, qui appartiennent à des terminaux et/ou à des postes intermédiaires d'un dispositif de transmission d'informations, échangent entre elles, des informations pendant le fonctionnement normal et par l'intermédiaire d'un réseau de transmission de télégrammes, qui comporte un canal de contrôle en fonctionnement d'une section de transmission (4) de telle manière des informations que des télégrammes d'interrogation de l'unité de contrôle et des télégrammes de réponse, contenant des données de contrôle, des unités à processeur (6) sont transmis,
caractérisé par le fait
que les unités à processeur sont pourvues d'adresses individuelles du fait qu'une unité à processeur (6), qui est raccordée à l'une des deux extrémités de la section respective de transmission (4) et qui sert d'unité d'adressage dans l'opération d'adressage, envoie à la section concernée de transmission (4), un télégramme d'adressage qui contient une identification du télégramme d'adressage et une adresse, et que les unités à processeur (6) de la section de transmission (4) retransmettent, aux unités à processeur (6) suivantes, les télégrammes d'adressage et/ou un nouveau télégramme d'adressage, après une incrémentation de l'adresse contenue dans le télégramme d'adressage, et que l'unité à processeur (6) de la section de transmission mémorise l'adresse du télégramme d'adressage reçu ou émis, respectivement en tant que sa propre adresse.

2. Procédé suivant la revendication 1, caractérisé par le fait que les unités à processeur (6) transmettent les télégrammes d'adressage et émettent, ensuite, en plus, le nouveau télégramme d'adressage.

3. Procédé suivant la revendication 1, caractérisé par le fait que les unités à processeur (6) ne retransmettent pas des télégrammes d'adressage reçus lors de l'opération d'adressage, mais retransmettent uniquement le nouveau télégramme d'adressage à l'unité à processeur (6) suivante.

4. Procédé suivant l'une des revendications 1 à 3, caractérisé par le fait que le réseau de transmission de télégrammes comporte plusieurs sections de transmission (4) et que les adresses des unités à processeur (6) sont constituées par une première adresse partielle pour la section de transmission concernée (4) et par une seconde adresse partielle pour le numéro d'ordre de l'unité à processeur (6) dans la section de transmission, et que les unités à processeur (6) incrémentent uniquement la seconde adresse partielle avant la retransmission du nouveau télégramme d'adressage.

5. Procédé suivant la revendication 4, caractérisé par le fait que dans le cas de plusieurs sections de transmission (4a...4z) branchées en chaîne, l'unité à processeur (6), qui est située à l'extrémité de la section de transmission, qui est située à l'opposé de l'unité d'adressage, ou la première unité à processeur (6) de la section de transmission suivante, incrémente aussi bien la première que la seconde adresse partielle.

6. Procédé suivant la revendication 4, caractérisé par le fait que dans le cas de plusieurs sections de transmission (4a...4z) branchées en chaîne, l'unité à processeur (6) qui est située à l'extrémité de la section de transmission située à l'opposé de l'unité d'adressage, ou la première unité à processeur (6) de la section de transmission suivante, incrémente la première adresse partielle et ramène la seconde adresse partielle à une valeur initiale (001).

7. Procédé suivant l'une des revendications 1 à 4, caractérisé par le fait que le réseau de transmission de télégrammes est un réseau qui est constitué par plusieurs réseaux linéaires contenant chacun au moins une section de transmission (4) et qui présente une structure en étoile et à dérivation, et que des unités d'adressage situées au niveau des noeuds du réseau sont préréglées, au niveau de leur première partie d'adresse, respectivement sur une adresse prédéterminée et délivrent, lors de la réception d'un télégramme d'adressage de départ, un télégramme d'adressage qui est, dans la première partie de l'adresse, l'adresse préréglée de la section de transmission concernée et qui est, dans la seconde partie de l'adresse, le numéro d'ordre proprement dit dans la section de transmission concernée (4).

8. Montage pour l'adressage d'unités à processeur servant à contrôler et/ou à commander un dispositif de transmission d'informations, et dans lequel au moins une unité de contrôle (7,8) et des unités à processeur qui sont pourvues d'adresses et qui appartiennent à des terminaux et/ou à des postes intermédiaires d'un dispositif de transmission d'informations, sont reliées entre elles par l'intermédiaire d'au moins un réseau de transmission de télégrammes, qui contient au moins un canal de contrôle en fonctionnement d'une section de transmission (4), et l'unité de contrôle comporte un dispositif pour émettre des télégrammes d'interrogation, et les unités à processeur (6) comportent un dispositif pour émettre des télégrammes de réponse contenant des données de contrôle, pour la mise en oeuvre du procédé suivant la revendication 1,
caractérisé par le fait
qu'à l'une des deux extrémités de la section de transmission respective (4) est raccordée une unité à processeur qui est utilisée, lors de l'opération d'adressage, comme unité d'adressage et qui comporte un dispositif pour émettre des télégrammes d'adressage, et que les unités à processeur de la section de transmission conportent un dispositif pour retransmettre les télégrammes d'adressage et/ou de nouveaux télégrammes d'adressage, un dispositif pour incrémenter l'adresse contenue dans un télégramme d'adressage reçu et une mémoire d'adresses pour la mémorisation de l'adresse du télégramme d'adressage reçu ou émis.

9. Montage suivant la revendication 8, caractérisé par le fait que pour la mise en oeuvre du procédé selon la revendication 7, il est prévu, en un noeud (N1...N6) du réseau de transmission de télégrammes, au moins deux unités à processeur branchées en cascade (figures 5, 6).

10. Procédé suivant l'une des revendications 1 à 4, caractérisé par le fait que le réseau de transmission de télégrammes est un réseau à structure d'embranchement en étoile, constitué par plusieurs réseaux linéaires contenant chacun au moins une section de transmission (4), et que des unités à processeur situées au niveau des noeuds (N1...N6) du réseau sont susceptibles d'être réglées, après réception d'un télégramme d'adressage et par l'intermédiaire du montage en cascade, par la première partie de l'adresse, sur une adresse et émettent, lors de la réception d'un télégramme d'adressage de départ, le télégramme d'adressage qui est, dans la première partie de l'adresse, l'adresse de la section de transmission concernée et, dans la seconde partie de l'adresse, le numéro d'ordre proprement dit dans la section de transmission concernée (figures 5, 6).

11. Procédé suivant l'une des revendications 1 à 7 ou suivant la revendication 10, caractérisé par le fait que, lors de l'enfichage du module concerné, les unités à processeur (6) sont commutées dans un état, dans lequel, pendant un intervalle de temps vide prévus respectivement à la suite du cycle d'appel, elles émettent un télégramme de demande, ce qui amène l'unité d'adressage associée à délivrer un télégramme d'adressage.

12. Procédé suivant la revendication 11, caractérisé par le fait que lors du remplacement d'une unité à processeur (6) qui n'est pas une unité d'adressage, l'unité d'appel est activée par un télégramme de demande pour conférer à l'intervalle de temps vide une durée suffisante pour le processus d'adressage.

13. Montage suivant la revendication 8, caractérisé par le fait que l'unité à processeur (6) est agencée de telle sorte que, dans un premier mode de fonctionnement (fonctionnement normal), elle transmet des télégrammes et que, dans un second mode de fonctionnement (fonctionnement à mémoire), elle retransmet des télégrammes reçus après une mémorisation, notamment après un traitement.
